Europäisches Patentamt

European Patent Office

Office européen des brevets

(19)

(11) **EP 0 966 352 B1**

(12) **EUROPEAN PATENT SPECIFICATION**

(45) Date of publication and mention
of the grant of the patent:
**28.08.2002 Bulletin 2002/35**

(51) Int Cl.⁷: **B32B 27/12**, B32B 27/34,
B60R 21/16

(21) Application number: **98910547.3**

(22) Date of filing: **13.03.1998**

(86) International application number:
**PCT/CA98/00236**

(87) International publication number:
**WO 98/041398 (24.09.1998 Gazette 1998/38)**

(54) **COMPOSITE SHEET MATERIAL COMPRISING POLYAMIDE FILM AND FABRIC**

VERBUNDSCHICHTMATERIAL AUS EINEM POLYAMIDFILM UND EINEM GEWEBE

MATERIAU COMPOSITE EN FEUILLE, COMPRENANT UNE PELLICULE POLYAMIDE ET UNE
TOILE

(84) Designated Contracting States:
**DE FR GB**

(30) Priority: **14.03.1997 US 40712 P**
**12.03.1998 US 38923**

(43) Date of publication of application:
**29.12.1999 Bulletin 1999/52**

(73) Proprietor: **E.I. Dupont de Nemours and
Company, Inc.
Wilmington, DE 19898 (US)**

(72) Inventors:
• **THURGOOD, Christopher, Paul
Kingston, Ontario K7P 1Z1 (CA)**
• **MOLLISON, Alistair, Norman
Oakville, Ontario L6H 3J4 (CA)**
• **WHITFIELD, Geoffrey, St. Quentin
Kingston, Ontario K7L 3V3 (CA)**

(74) Representative: **Jones, Alan John et al
CARPMAELS & RANSFORD
43 Bloomsbury Square
London, WC1A 2RA (GB)**

(56) References cited:
**EP-A- 0 489 320          WO-A-95/15992
DE-A- 2 642 883          GB-A- 1 342 667
US-A- 4 954 393          US-A- 5 091 478**

• **DATABASE WPI Section Ch, Week 9511 Derwent
Publications Ltd., London, GB; Class A17, AN
95-078159 XP002070048 & JP 07 003 109 A
(MITSUBISHI KASEI CORP)**
• **DATABASE WPI Section Ch, Week 9338 Derwent
Publications Ltd., London, GB; Class A92, AN
93-299407 XP002070049 & JP 05 213 136 A
(TORAY IND INC)**
• **DATABASE WPI Section Ch, Week 9437 Derwent
Publications Ltd., London, GB; Class A95, AN
94-299500 XP002070050 & JP 06 227 347 A
(KURARAY CO LTD)**

EP 0 966 352 B1

## EP 0 966 352 B1

**Description**

**FIELD OF THE INVENTION**

The present invention relates to composite sheet materials for use in many different applications, for example tarpaulins, sails and parachutes, but most especially for use in airbags.

Also disclosed is a method for manufacturing the composite and an airbag structure, a method for making the airbag structure and a method for recovering the composite sheet materials for recycling purposes. Finally, there is also described a method for selecting the formulation of a multiphase polymer system so as to produce films having particular laminating properties.

**BACKGROUND OF THE INVENTION AND RELATED PRIOR ART**

Airbag systems are safety devices on motor vehicles, which have been proven to greatly reduce the risk of injury and death in vehicle accidents, particularly collisions. A critical component of the airbag system is the airbag cloth, the material that is inflated and restrains the occupant from hitting the interior of the automobile during an accident.

The cloth is usually a coated fabric. The fabric is typically woven from high tenacity nylon or polyester fibers with sufficient strength to withstand the internal pressures associated with deployment, which reach approximately 9 to 12 psi on impact of the occupant upon the bag, within the short time span of less than 100 milliseconds.

Fabric coating seals the fabric against gas leakage, particularly at the seams (by reducing the "combing" propensity), overall fabric permeability is made more predictable, and coating can enhance the productivity of the cutting and sewing of the structure. The coating is typically a synthetic rubber such as polychloroprene or silicone rubber.

All of the publications and patents referenced herein are hereby incorporated herein by reference. The practice established with the introduction of coated airbags into the North American marketplace of coating with grades of neoprene, a chloroprene elastomer, gave way to the use of polymeric silicones, which were cross-linked by peroxides and applied with the aid of a solvent. A fabric coating intended for materials used to construct airbags, involving unvulcanized thermosetting organopolysiloxane products, applied with an organic solvent, represents a recent advance in silicone technology (**US patent 5,208,097**, granted to Dow Corning Toray Silicone Co. LTD).

The use of silicone for the coating of fabrics is well established in a variety of applications: the largest market is reported to be the coating of airbag cloth (**"L'enduction qui rend l'airbag plus fiable - The coating which makes airbags secure", Fabrice Bohin, TUT, 1er Trimestre 1997, N° 23).** This article describes the trend towards the use of silicone compounds, which do not require the use of solvents during the coating process.

Claimed to be specifically designed to meet airbag market evolution, these compounds are said to offer specific rheological properties allowing coatings, generally varying in thickness between 40 and 100 microns, which afford improved thermal protection over silicone coatings applied through the use of solvents.

Strong adhesion between the polymeric silicone layer and the fabric substrate is attributed to covalent bonding between chemical groups of the silicone polymer and reactive species on the surface of the fabric. This bonding is said to create a composite, which is "perfectly homogeneous". Two methods of recycling of the composite are proposed: incineration or re-extrusion with virgin polyamide 6,6 material to form articles with properties comparable to those of polypropylene.

It is the contention of Reeves international Automotive Airbag Group (RIAAG), after much discussion with airbag module assemblers that the ideal material for an airbag is actually an uncoated fabric that performs like a coated fabric. The response of the Reeves Group to the challenge of engineering a structure, which combines the positive attributes of both manifestations of air bag fabric, has been to develop a material classified as a "hybrid coated/uncoated airbag" (**"A New Generation of Innovative Textile Substrates for Automotive Airbag", Richard C. Kerr, paper presented at an Automotive Industry Materials Symposium, October 24, 1996)**.

**US patent 5,486,210** assigned to Reeves Brothers Inc. covers chemistry in which covalent chemical bonding occurring between two dissimilar polymers comprising the coating and the substrate materials is effected by graft technology. Its applied form is a composite product (Reevair®, a registered trademark of Reeves Brothers, Inc. Reg. No. 1,949,316) of a fabric substrate and a chemically grafted urethane/acrylic copolymer. The claimed advantage over the use of silicone-based chemistry is cost.

Composites of film layered onto fabric substrates, with and without the use of adhesive layers, have been proposed as an alternative to the approach of creating a chemically bonded silicone-based system, which is an integral part of the airbag structure. Airbag constructions using such composites are claimed in **US Patents Nos. 5,302,432** to Shigeta et al.

The material of US Patent No. **5,302,432** is comprised of a non-woven synthetic fiber fabric, for that portion of the bag that will come in contact with the occupant, a woven synthetic fiber fabric forming the inside face of the bag, and a film of a polyolefin resin laminated between the fabric layers. It is contemplated that the outside layer, being of non-woven fabric, will present a softer surface to the occupant, while the inside fabric layer is intended to provide the required strength and barrier to penetration of the structure by hot gases. The film layer between the fabric layers, which is contemplated to prevent gas leakage, may be applied with, or without, the use of adhesives. The material of the film layer may be selected from high density polyethylene, low density polyethylene resin, polypropylene resin, ethylene-propylene copolymer resin and ethylene vinyl acetate copolymer resin. Alternatively layers of film may be bonded with adhesives and examples of such structures are found in **US Patent No. 4,963,412** to Kokeguchi as well as the Breed patent.

An invention related generally to coated fabrics, but directed more particularly to imparting low permeability characteristics to fabrics for use in automotive restraints, without recourse to neoprene or silicone materials, is granted to Milliken Research Corporation in **EP 0 761 868 A2**. An integral structure is obtained by melt fusing a thermoplastic material (such as polyamides, polyesters, polyolefins, thermoplastic polyurethanes) which is applied to the fabric as a light coating of powder.

Having a melting point at least 70 degrees below that of the melting point of the material comprising the fabric, the thermoplastic powder material undergoes rapid melting. Low melt viscosity aids preferential disposition of the coating material into the voids of a woven fabric. Controlled application of the powder ensures a light coating weight of less than one ounce per square yard of fabric substrate, while still yielding a very low permeability fabric.

In choosing to apply a low melting polyamide to a polyamide fabric substrate, thereby creating a composite from essentially one type of polymer system, the recycling of the material comprising the structure would be facilitated. This advantage has been cited in the creation of well-bonded composites consisting of reinforcing polyester and low melting polyester matrix fibres for protective clothing and marine textiles (for example), for which a patent was granted to Hoechst Trevira GMBH & Co. KG (**EP-768406-A1; DE 19537703-A1**).

Silicone coating of fabrics has a clear advantage over the use of neoprene for creating airbag materials, in that it is possible to attain or improve on specification requirements at significantly reduced weight. Chlorine attack on the fabric substrate, through the embrittling of the fibers comprising the fabric, has a deleterious effect on the properties of the composite structure with time. While neoprene itself is prone to embrittlement when exposed to heat aging effects, silicone compounds are characterized by a high degree of environmental stability. Fabrics coated with silicone display improved retention of properties in aging tests, compared with neoprene coated fabrics.

Notwithstanding the advances made in silicone technology, two concerns remain: the coating operation adds costs and the coated fabrics cannot be recycled efficaciously.

The formation of a chemically bonded system mitigates against the possibility of recovering the coating layer and the substrate, by separating them. Separation is required in order to create the possibility of achieving the most sustainable form of recycling, in which little emphasis is placed upon recycling into products of lower value, or upon incineration with energy recovery.

Notwithstanding the claims made that silicone coated nylon fabric, when chopped and heated, "...can be dispersed as with inorganic fillers, providing a different but sometimes advantageous profile of mechanical properties for the reprocessed nylon" (**"Evolution of airbag components and materials", Automotive Engineering, February 1994, pp. 99-103**), it is known that the presence of even small amounts of silicone in reprocessed nylon has deleterious effects upon mechanical properties. Even when "state-of-the-art" toughening technology is employed, the presence of silicone in small amounts reduces the impact strength of molded articles substantially.

The same concern may be expressed regarding the recycling of airbag materials constructed by chemical grafting of the urethane/acrylic copolymer system to a fabric substrate, as per the Reeves Brothers' art. Moreover, the application of the substrate treatment raises environmental impact concerns. Complex chemistry is employed to achieve the composite, involving treatments of the fiber or fabrics with aqueous grafting solutions containing metal ionic graft initiators (silver salts are especially preferred), catalysts (such as peroxides) for activating or regenerating the graft initiators, and water dispersible polymers.

The use of low melting polymers to create integral structures from composites with high melting like, or unlike, components suffers disadvantages. Application is limited to inflation with low temperature gases and penetration of the low melting material into the voids of the fabric substrate has the effect of stiffening the structure. It should be recognized that a true laminate, i.e. one that produces a bond between layers of the laminate as opposed to a structure where the film penetrates the structure of the fabric substrate is the most desired of possible laminates, as it constitutes the most readily recyclable structure.

The proposed materials of the film layer of the laminate structure claimed by *Shigata et al.*, having melting points significantly below those of the materials of the inside and outside fabric layers of the structure, are likely to penetrate the voids of the fabric layers, thereby mitigating the contemplated advantage of using a non-woven outer layer for the sake of presenting a soft outside surface of the airbag to the occupant upon deployment. Having chosen low melting materials for the film layer, it becomes necessary to tightly weave the inside fabric of a heat resistant material, in order to protect the structure from penetration by hot inflation gases. The advantage of using a film layer for control of the permeability of the structure, in allowing the fabric of the structure to be lightly woven, is lost. And in the preferred embodiment of the patent, adhesives, and treatment of the surfaces of the fabric layers to aid adhesion, are contemplated.

Where the use of adhesives to achieve strong bonding in laminations of film and fabric is proposed, the penalties associated with chemically bonded systems, and those associated with integral structures, are incurred.

There are generic requirements associated with flexible composite structures for applications ranging from (e.g.,) clothing and architectural fabrics to protective systems such as airbags. These include: a) environmental stability, particularly at temperature extremes; b) a balance of strength and flexibility; c) control of permeability; c) formability; d) low environmental impacts in the forming steps (the steps taking place in what is often referred to as the Value-adding Chain (VAC) from petroleum feedstock (for example) through to the customer in final product form; e) recyclability; f) cost; and g) design flexibility.

The requirements pertaining specifically to the use of flexible composite structures for airbags are expressed clearly in standards governing the qualification of materials. These are directed at assuring vehicle occupant safety of an adult driver positioned closely in front of a steering wheel or a passenger predictably positioned in front of the instrument panel.

The attributes of a material for airbag use must be considered at the very high strain rates associated with rapid deployment. It is also critical that the structure fabricated from the airbag material, once deployed, deflates appropriately in time and space. Consideration must also extend to how the Supplemental Restraint device can protect a lightweight out-of-position occupant sitting somewhere in the vehicle, not necessarily secured by a seat belt.

With evolution in the inflation gas system employed to deploy the airbag, the flexibility to be able select the materials of construction, and the structure formed from these materials, has assumed significance. Beyond the need to design for safe and effective deployment by sodium azide-based systems, where protection of the occupant from hot particulates is a critical consideration, there is now the need and opportunity to specify airbag materials for operation with low temperature gases, or with clean propellants which produce gases hotter than that associated with the azide generant.

With cost such an important consideration in Value-adding Chains, in general, and particularly in the case of the automotive industry, it is highly desirable to be able to select materials in a way that opportunity can be taken to effect production efficiencies when performance requirements are not stringent, or to "tune" materials properties when the application demands high performance.

With- the growth in the emphasis being placed upon effective and efficient recycling of materials through the life cycle of the product which they constitute, it is increasingly important to be able to "design in" the recycling attributes of materials.

Up until now, it has not been possible to enjoy the capability to design flexible, composite sheet materials to meet the practical requirements cited above.

## SUMMARY OF THE INVENTION

The present invention seeks to provide a composite sheet material of film and fabric that is lightweight and supple, yet has the strength that will allow it to withstand the strong forces occurring when an airbag is inflating. A particularly important feature of the composite sheet material of this invention is that after use, it can be subjected to a mechanical recovery process that does not cause cross contamination of the film and fabric and hence the airbag made from the present composite sheet material meets recycling requirements.

The composite sheet material of the present invention allows the requirements of an airbag material to be met advantageously. However, the material of this invention is suitable for use in a range of applications, for example tarpaulins, sails and parachutes. While these utilities are not described in detail, their implementation will be apparent from this description.

The present invention provides a composite sheet material comprising a polymeric polyamide film bonded to a fabric, the polymeric polyamide film being selected from films having a melting point of less than about 220°C and the fabric being selected from polyamides and polyesters.

The polyamide of the polymeric film has at least some adjacent amide linkages along its polymer backbone, at least one pendant $C_1$-$C_3$ alkyl branch, at least one sequence of at least seven consecutive carbon atoms and preferably a melting point in the range of from about 100°C to about 200°C. The polyamide polymeric film may comprise a monolayer film of a blend of polyamides, a multilayer film of polyamides, or a coextruded film of polyamides.

The polyamide polymeric film may be selected from polyamide films having a melting point of less than 200°C and a degree of crystallinity less than that of nylon 66.

In another aspect of this broad form of the invention, the polyamide may be prepared from (a) at least one dicarboxylic acid and at least one diamine wherein the at least one dicarboxylic acid and/or the at least one diamine contain at least one pendant alkyl branch having one to three carbon atoms, and wherein the at least one dicarboxylic acid and/or the at least one diamine have a sequence of at least seven methylene groups;

(b) at least one alpha, omega aminocarboxylic acid, having the formula of H2N-R1-COOH, in which R1 is an aliphatic moiety having at least seven methylene groups in sequence and one pendant alkyl branch having one to three carbon atoms;

(c) at least one diamine and at least one nitrile selected from the group consisting of alpha, omega-amino alkylene nitriles and alpha omega alkylene dinitriles, wherein the diamine, nitrile and /or dinitrile contain at least one pendant alkyl branch having one to three carbon atoms; and wherein the diamine, nitrile and /or dinitrile comprise at least seven methylene groups; or

(d) mixtures of any of the monomers described in (a) - (c) above.

The other monomers that may be used to prepare the polyamide of the present invention are selected from aromatic dicarboxylic acids, aromatic diamines, alicyclic dicarboxylic acids and alicyclic diamines. The aromatic dicarboxylic acids may be selected from terephthalic acid and isophthalic acids, the alicyclic dicarboxylic acid is 1,4-bismethylene cyclohexyl dicarboxylic acid., and the alicyclic diamine is 1,4-bismethylene diamino cyclohexane.

The composite sheet material may comprise a polymeric film based on copolymers and terpolymers of hexamethylene diamine, 2-methylpentamethylene diamine, adipic acid, dodecanedioic acid and epsilon-caprolactam (nylon 6).

The present invention provides in yet another main aspect, a composite sheet material consisting of a fabric substrate laminated to a polymeric film layer, wherein the film layer is formed from a multiphase polymer system comprising

at least one linear aliphatic polyamide resin (**PA-I**), having a narrow melting point temperature range, a melting point in excess of 200 °C, and a molecular weight of at least 5000;

at least one polyamide resin (**PA-II**) comprising at least one pendant alkyl branch having 1 to 3 carbon atoms within at least two amide linkages along the polymer backbone and at least one sequence of at least seven consecutive carbon atoms, excluding carbon atoms in pendant alkyl branches, if any, within at least two amide linkages along the polymer backbone, the melting point of the polyamide being less than 200°C; and

at least one of component (**f-PO**) which comprises at least one of:

an ethylene copolymer, E/X/Y, where E is ethylene and is at least 50 % by weight of E/X/Y, X is from 1-35 % by weight of an acid containing unsaturated mono-carboxylic acid, and Y is 0-49 % by weight of a moiety derived from at least one alkyl acrylate, alkyl methacrylate, alkyl vinyl ether, carbon monoxide, sulfur dioxide, or mixtures thereof where the alkyl groups contain 1-12 carbon atoms, and further wherein the acid groups in the acid-containing moiety are neutralized from 0-100% by weight of a metal ion;

a polymeric grafting agent which contains reactive groups selected from at least one of epoxides, isocyanates, aziridines, silanes, alkyl halides, alpha-halo ketones and aldehydes, or oxazoline, which reacts with the acid-containing moieties in component i) and additionally reacts with the graft sites of components (**PA-I**) and (**PA-II**), and the weight percent of the monomer(s) containing the reactive groups is 0.5-15 weight percent of the polymeric grafting agent, and the remainder of the polymeric grafting agent contains at least 50 % by weight of ethylene and from 0-49 % by weight of a moiety derived from at least one alkyl acrylate, alkyl methacrylate, alkyl vinyl ether, carbon monoxide, sulfur dioxide, or mixtures thereof where the alkyl groups contain 1-12 carbon atoms; and

at least one $C_2$-$C_{20}$ polyolefin selected from polyethylene, polypropylene, ethylene propylene diene terpolymer, copolymers of ethylene with vinyl acetate, carbon monoxide, or ethylenically unsaturated carboxylic acids or esters thereof upon which are grafted from about 0.05 to about 5 % by weight of monomers or mixtures of monomers selected from ethylenically unsaturated acidic monomers or their derivatives including acrylic acid, methacrylic acid, maleic acid, fumaric acid, itaconic acid, crotonic acid, 5-norborene-2,3-dicarboxylic acid, maleic anhydride, monomethyl fumarate and monomethyl maleate; and from ethylenically unsaturated monomers containing amino or hydroxy functional groups including vinyl pyridines, vinyl silanes, 4- vinyl pyridine, vinyltriethyloxysilane and allyl alcohol; wherein the composition of the polymer system comprising the film layer is characterized by the functional:

$$f(c) = \{[PA\text{-}I] + [f\text{-}PO]\}/\{[PA\text{-}II] + [f\text{-}PO]\}$$

$$([PA\text{-}I] + [PA\text{-}II] + [f\text{-}PO] = 1)$$

wherein **f(c)** is a Composition Parameter; [**PA-I**] is concentration of polyamide in % (w/w) (**PA-I**); [**PA-II**] is concentration of polyamide in % (w/w) (**PA-II**); and [**f-PO**] is concentration in % (w/w) of (**f-PO**), and **f(c)** has values in the range of approximately 0.5 to approximately 2.0;

wherein the numerator principally determines the thermal barrier properties of the film and the denominator principally determines the temperature for laminating the film layer to the fabric substrate.

In its most basic form, the invention provides a multi-layer composite sheet material comprising at least one polymeric film bonded to at least one fabric layer, wherein the polymeric film layer is formed from multiphase polymer systems, which are drawn from a continuum of formulations comprised of two categories of polyamides, and at least one of a category of components described hereinafter as functionalized polyolefins.

The present invention provides a fabric for an automotive airbag material made of filaments or yarns of a polyamide or a polyester. A film layer is formed, or layers of film are formed, by conventional means such as casting, extrusion coating onto fabric, blowing or orienting from multiphase polymeric formulations selected to meet the requirements of a given airbag application. Casting the film is preferred. A laminated composite structure is formed with the aid of the algorithm set out previously.

The algorithm set out above creates the Composition Parameter that has as its numerator the simple algebraic sum of the compositions of the components of the polymeric formulation, which principally determines the thermal barrier properties of the film. The said Composition Parameter has as its denominator the simple algebraic sum of the compositions of the components, which principally governs the laminating temperature of the film layer to the fabric substrate.

The Composition Parameter now makes it possible to predict the properties of the resulting film and hence to control many aspects of the composite sheet material that therefore ensure it is capable of meeting the requirements of the applications for which it is manufactured.

Therefore in another aspect, this invention provides a method for selecting the characteristics of a film for use in a composite sheet material formed of film and fabric, and the film is formed from the multiphase polymer system defined above in accordance with the functional:

$$F(c) = \{[PA\text{-}I] + [f\text{-}PO]\}/\{[PA\text{-}II] + [f\text{-}PO]\}$$

$$([PA\text{-}I] + [PA\text{-}II] + [f\text{-}PO] = 1)$$

wherein **f(c)** = Composition Parameter, [**PA-I**] = concentration of polyamide (**PA-I**); [**PA-II**] = concentration of polyamide (**PA-II**); and [**f-PO**] = concentration of (**f-PO**); and **f(c)** has values in the range of approximately 0.5 to approximately 2.0; and the numerator principally determines the thermal barrier properties of the film and the denominator principally determines the laminating temperature for laminating the film layer to the fabric substrate. In all instances it should be noted that the terms used in the functional above and hereafter, the units are % (w/w).

In a most significant aspect of the present invention, the lamination of the film layer, or layers, to the fabric substrate is effected without the use of an adhesive layer between the film and fabric contacting surfaces. In manufacturing the film and then the composite material, the value of the Composition Parameter, associated with a given formulation from which the film layer in contact with the surface of the fabric substrate is formed, is computed. A simple monotonic increasing relationship between the temperature, at which a strongly bonded laminate is formed, and the Composition Parameter allows the lamination temperature to be computed. At temperatures much below the computed value, only weak thermal bonding between contacting film and fabric substrate is achieved. At temperatures much above the computed value an integral bonded structure is formed, which is characterized by the material of the contacting film layer having penetrated the voids of the fabric substrate.

In yet another aspect of the present invention, there is provided a method for recovering the components of a composite sheet material wherein the material may be mechanically delaminated using thermal means, if necessary and with substantially no cross contamination of the components.

In another embodiment of the recovery of materials process, there is provided a method for recovering the components of an airbag composite sheet material which comprises disassembling the material from its inflation module, when required; deconstructing the airbag structure, as needed; subjecting the material to a mechanical delamination process, optionally including thermal delamination means; and recovering the film and fabric components with substantially no cross contamination thereof for recycling.

The composite sheet of the present invention is composed of a film layer, wherein the first component of the film layer is at least one linear aliphatic polyamide (hereinafter referred to as (**PA-I**) possessing a narrow melting point temperature range, a melting point in excess of 200°C, and it has a molecular weight of at least 5000.

The first component (**PA-I**) of the tertiary multiphase polymer system comprising the film layer is used in conjunction with a second component (hereinafter referred to as **PA-II**), which is at least one polyamide resin comprising at least one pendant alkyl branch having 1 to 3 carbon atoms within at least two amide linkages along the polymer backbone and at least one sequence of at least seven consecutive carbon atoms, excluding carbon atoms in pendant alkyl branches, if any, within at least two amide linkages along the polymer backbone, the melting point of the polyamide being less than 200°C.

In one embodiment, the first component and the said second component of the tertiary multiphase polymer system comprising the film layer are used in conjunction with a third component (hereinafter referred to as **f-PO**), which is at least one of:

(i) an ethylene copolymer, E/X/Y, where E is ethylene and is at least 50 % by weight of E/X/Y, X is from 1-35 % by weight of an acid containing unsaturated mono-carboxylic acid, and Y is 0-49 % by weight of a moiety derived from at least one alkyl acrylate, alkyl methacrylate, alkyl vinyl ether, carbon monoxide, sulfur dioxide, or mixtures thereof where the alkyl groups contain 1-12 carbon atoms, and further wherein the acid groups in the acid-containing moiety are neutralized from 0-100% by weight of a metal ion;

(ii) a polymeric grafting agent which contains reactive groups selected from at least one of epoxides, isocyanates, aziridines, silanes, alkyl halides, alpha-halo ketones and aldehydes, or oxazoline, which reacts with the acid-containing moieties in component i) and additionally reacts with the graft sites of components (**PA-I**) and (**PA-II**), and the weight percent of the monomer(s) containing the reactive groups is 0.5-15 weight percent of the polymeric grafting agent, and the remainder of the polymeric grafting agent contains at least 50 % by weight of ethylene and from 0-49 % by weight of a moiety derived from at least one alkyl acrylate, alkyl methacrylate, alkyl vinyl ether, carbon monoxide, sulfur dioxide, or mixtures thereof where the alkyl groups contain 1-12 carbon atoms; and

(iii) at least one $C_2$-$C_{20}$ polyolefin selected from polyethylene, polypropylene, ethylene propylene diene terpolymer, copolymers of ethylene with vinyl acetate, carbon monoxide, or ethylenically unsaturated carboxylic acids or esters thereof upon which are grafted from about 0.05 to about 5% by weight of monomers or mixtures of monomers selected from ethylenically unsaturated acidic monomers or their derivatives including acrylic acid, methacrylic acid, maleic acid, fumaric acid, itaconic acid, crotonic acid, 5-norborene-2,3-dicarboxylic acid, maleic anhydride, monomethyl fumarate and monomethyl maleate; and from ethylenically unsaturated monomers containing amino or hydroxy functional groups including vinyl pyridines, vinyl silanes, 4-vinyl pyridine, vinyltriethyloxysilane and allyl alcohol.

The first component (**PA-I**) may be an ABAB homo-polyamide, in particular, polycaproamide, known familiarly as nylon 6, or an AABB homo-polyamide, in particular, polyhexamethyleneadipamide, known familiarly as nylon 6,6. Polyamides in the category (**PA-I**) are known to be formed readily in polycondensation processes, whether as homo- or co-polymers, and they can be readily formed by extrusion and molding processes into thermoplastic articles, which possess good strength and toughness and abrasion resistance. The articles include films.

The second component (**PA-II**) may be an ABAB homo-polymer of 2-methylpentamethylenediamine and dodecanedioic acid. Polyamides in the category (**PA-II**) are known to be formed readily in polycondensation processes, whether as homo- or co-polymers, and that they can be readily formed by extrusion and molding processes into thermoplastic articles which possess good strength and toughness, adhesiveness and abrasion resistance. The articles include films.

The third component (**f-PO**) is a category of ingredients comprised of at least one of (i) ethylene copolymers classified as ionomers; (ii) compatibilizers; and (iii) grafted polyolefins. Ingredient (i) of the (**f-PO**) category is exemplified by Surlyn® type polymers, the form most preferred for use in the compositions of the present invention being ethylene/methacrylic acid, ethylene/acrylic acid copolymers, ethylene/methacrylic acid/n-butyl acrylate and ethylene/methacrylic acid/methyl acrylate terpolymers: zinc-neutralized Surlyn® is preferred for nylon over sodium-neutralized Surlyn®. Some or all of component (i) may be replaced by component (iii).

The polyamides of the (**PA-I**) category may be melt blended by conventional means with polyamides of the (**PA-II**) category, at least up to the preferred proportion of approximately 30% by weight of (**PA-I**) of the tertiary formulation. Generally, each component may comprise about 10% to about 90% by weight of the blend and more preferably, the blend may be a 50:50 formulation. The binary phase materials so formed can be readily extruded and molded into thermoplastic articles displaying a useful balance of strength and toughness and adhesiveness. The articles include films that are characterized by thermal properties between those associated with the respective polyamides forming the blends.

In another aspect of the invention, the polyamides of the (**PA-I**) category may be melt blended by conventional means with ingredients belonging to the (**f-PO**) category, and that the binary phase materials so formed can be readily extruded and molded into thermoplastic articles displaying a unique balance of flexibility, toughness, chemical resistance and end-use temperature performance. These blend formulations are exemplified by the material known as ZYTEL FN®, a registered trademark of E.I. DuPont de Nemours Inc. In this blend, the (**PA-I**) and the (**f-PO**) components may comprise from 10% to about 90% by weight. In the blend the (PA-I) and the (f-PO) components are preferably in approximately equivalent proportions.

It is known that melt blends of the polyamide category (**PA-II**) with ingredients of the category (**f-PO**) can be readily extruded into films suitable for packaging applications.

Films formed from tertiary multiphase polymer systems, formed by melt blending of approximately equal amounts of the three categories of materials (**PA-I**), (**PA-II**) and (**f-PO**) by conventional means balance the useful properties of the respective binary combinations: (**PA-I**) with (**f-PO**); and, (**PA-II**) with (**f-PO**). These formulations extrude readily into film form for use in embossed laminates structures, as disclosed in **U.S. Patent Application No. 60/024,150** filed March 25, 1996 in the name of N. Farkas, the disclosures of which are incorporated herein by reference.

Thus the present invention provides a polymeric film bonded to a fabric using conventional technology. The film itself is its own adhesive: an additional layer of an adhesive material is not required to effect the bonding. Moreover, the temperatures required in the laminating step are significantly lower than the melting point of the yarn of the fabric so that the mechanical properties of the fabric are not lessened significantly by the laminating process.

Composite materials have been employed in the airbag art since the inception of neoprene as an elastomeric fabric coating. Silicone coating has provided advantages over neoprene coating, and there have been advances in Silicone coating art. There has been recently introduced a "hybrid" structure, which relies upon chemical bonding of a coating material to the fabric substrate, as an alternative non-silicone coating. The present film and fabric composite structures, exploiting strong thermomechanical bonding, now offer advantages over the hybrid structure.

The composite sheet material is implemented as airbag material with a Composition Parameter, which can be applied to determine the lamination temperatures appropriate to a multiphase polymer formulation chosen to meet the requirements of a given airbag application, as defined by the temperature of inflation.

The lamination process is performed in conventional manner with conventional apparatus. The film may be thermally laminated to the fabric substrate immediately upon manufacture or thereafter. Heat is applied as required and in accordance with the film and fabric characteristics.

Additionally industrial utility of the present invention stems from the attribute of the lamination, whereby a strongly bonded material may be readily delaminated, when required, for recycling of the layer materials without substantial cross-contamination.

Regardless of the method of manufacture of the composite sheet material, it can be cut and sewn using techniques used for a conventionally coated fabric. In this regard, reference may be had to **U.S. Patent No. 5,529,340** issued June 25, 1996 to Fairbanks, the disclosures of which are incorporated herein by reference. This patent discloses a single pattern piece, which is sewn, or seamed along cut edges of the pattern in a designated sequence to provide an airbag when fully inflated. Any other known techniques may be used to construct an airbag using the material of the present invention.

It should be noted that the fabric to which the film is bonded may be woven, non-woven, knitted or spunbonded and made from polyamide or polyester yarn or fibre.

The film can be made thin typically 15 - 100 micrometers but preferably 15 - 40 micrometers.


**DETAILED DESCRIPTION OF THE INVENTION**


**BRIEF DESCRIPTION OF THE DRAWINGS**

In the accompanying drawings which are used to illustrate the invention only,

Figure 1 is a graphical representation of a polymeric system composition diagram that relates to the present invention;

Figure 2 is a graphical representation of the composition parameter **f(c)** of formulations located on the polymer composition diagram of Figure 1; and

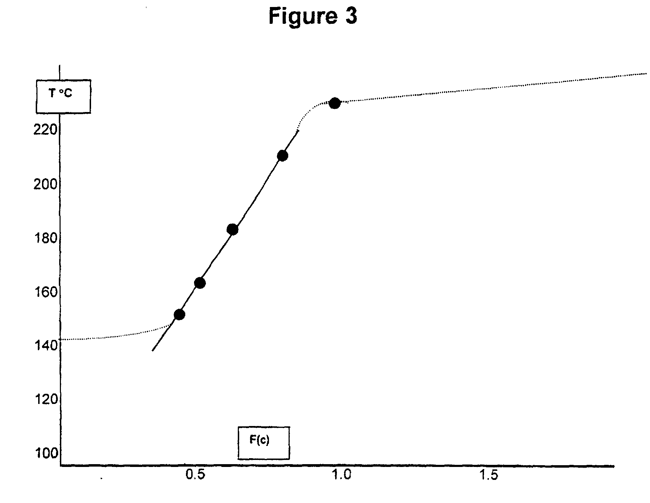

Figure 3 is a graphical representation of the relationship between measured sealing temperature and the Composition parameter, **f(c).**

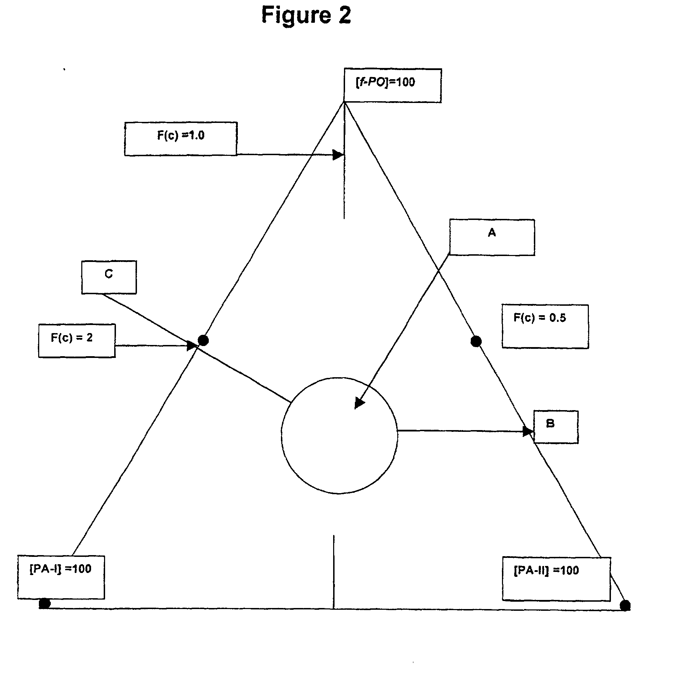

In Figure 2 of the drawings, the following legend applies.

A is the composition region of the preferred embodiment; B is the region of increased formability; and C is the region of increased thermal properties.

A "Composite Material" is defined in the Concise Encyclopedia of Science & Technology" (3rd. Ed., Sybil P. Parker (Ed.), McGraw-Hill Inc., 1994) as a "material that results when two or more materials, each having its own, usually different characteristics, are combined in order to provide the composite with useful properties for specific applications. Each of the input materials should serve a specific function in the composite, which in turn should show distinctive new or improved characteristics."

The present invention is about composites created by dispersion into thermoplastic polyamides of elastomeric, low melting ethylene copolymers possessing functionality which imparts enhanced resistance to environmental stresses, such as that due to heat and moisture and chemicals, while the properties valued in a thermoplastic material, such as strength and flexibility and formability, are retained. It may be said of these composites that the "barrier" properties of the thermoplastic materials so-formed have been enhanced. And the present invention is about composites comprised of discrete layers, the layers contributing their respective attributes to the performance of the composite. Thin, strong flexible films provide lightweight, effective coverage of surfaces: as anisotropic structures fabrics absorb energy well, providing "strength" to forms that are to be subjected to biaxially directed stresses at high strain rates: viz., airbag materials.

**DESCRIPTION OF THE POLYMER SYSTEMS**

The polymers comprising the polymeric film in the composites of the present invention have been disclosed in a US Patent Application No. 60/014,150 filed March 25, 1996 in the name of N. Farkas (the disclosures of which are incorporated herein by reference). It should be emphasized that the present invention offers a functional that may be employed to combine the polymer system components in such a way that the properties of the resultant film are predictable and can be tailor made to the desired application. This represents a significant advance in the art.

The method of the present invention involves the melt blending by conventional means of polymers from the main categories described hereinabove, in order to create multi-phase thermoplastic polymer formulations, wherein the compositions of the polymeric components in the formulations are determined in accordance with the needs of the application.

Consider the creation of a binary phase polymeric system, by melt blending of two components selected from the main categories (**PA-I**) and (**PA-II**), comprising:

i) from 5 to about 50 % by weight of at least one linear aliphatic polyamide resin possessing a narrow melting point range, a melting point greater than 200°C, and it has a number average molecular weight of at least about 5000;
ii) from about 50 to about 95 % by weight of at least one polyamide resin comprising at least one pendant alkyl branch having 1 to 3 carbon atoms within at least two amide linkages along the polymer backbone and at least one sequence of at least seven consecutive carbon atoms, excluding carbon atoms in pendant alkyl branches, if any, within at least two amide linkages along the polymer backbone, the melting point of the polyamide being less than 200°C.

Specifically, for the purpose of illustration, consider the melt blending of 30% by weight of polycaproamide (as the **PA-I** component) with 70% by weight of the homopolymer of 2-methylpentamethylenediamine and dodecanedioic acid (as the **PA-II** component). With the best practice of melt blending and film forming art, a film may be cast which will display thermal characteristics between those of the two components comprising the blend. The film may be heat fused to itself, or to a fabric substrate, by conventional laminating means with relative ease, at a sealing temperature of approximately 160°C, as measured by methods to be described hereinbelow.

Now consider the creation of a tertiary multiphase polymeric system by the melt blending of the above-mentioned combination, whereby part of the **PA-II** component is substituted with an ingredient, or ingredients, selected from the third main category **(f-PO)**:

i) from about 5 to about 40 % by weight of at least one ethylene copolymer, E/X/Y, where E is ethylene and is at least 50 % by weight of E/X/Y, X is from 1-35 % by weight of an acid containing unsaturated mono-carboxylic acid, and Y is 0-49 % by weight of a moiety derived from at least one alkyl acrylate, alkyl methacrylate, alkyl vinyl ether, carbon monoxide, sulfur dioxide, or mixtures thereof where the alkyl groups contain 1-12 carbon atoms, and further wherein the acid groups in the acid-containing moiety are neutralized from 0-100% by weight of a metal ion;
ii) from about 0.5 to about 10% by weight of at least one polymeric grafting agent which contains reactive groups selected from at least one of epoxides, isocyanates, aziridines, silanes, alkyl halides, alpha-halo ketones and aldehydes, or oxazoline, which reacts with the acid-containing moieties in component iii) and additionally reacts with the graft sites of components (**PA-I**) and (**PA-II**), and the weight percent of the monomer(s) containing the reactive groups is 0.5-15 weight percent of the polymeric grafting agent, and the remainder of the polymeric grafting agent contains at least 50 % by weight of ethylene and from 0-49 % by weight of a moiety derived from at least one alkyl acrylate, alkyl methacrylate, alkyl vinyl ether, carbon monoxide, sulfur dioxide, or mixtures thereof where the alkyl groups contain 1-12 carbon atoms; and
iii) from 0 to about 40 % by weight of at least one $C_2$-$C_{20}$ polyolefin selected from polyethylene, polypropylene, ethylene propylene diene terpolymer, copolymers of ethylene with vinyl acetate, carbon monoxide, or ethylenically unsaturated carboxylic acids or esters thereof upon which are grafted from about 0.05 to about 5 % by weight of monomers or mixtures of monomers selected from ethylenically unsaturated acidic monomers or their derivatives including acrylic acid, methacrylic acid, maleic acid, fumaric acid, itaconic acid, crotonic acid, 5-norborene-2,3-dicarboxylic acid, maleic anhydride, monomethyl fumarate and monomethyl maleate; and from ethylenically unsaturated monomers containing amino or hydroxy functional groups including vinyl pyridines, vinyl silanes, 4- vinyl pyridine, vinyltriethyloxysilane and allyl alcohol.

Specifically, for the purpose of illustration, consider the melt blending of 30% by weight of polycaproamide (as the **PA-I** component) with 30% by weight of the homopolymer of 2-methylpentamethylenediamine and dodecanedioic acid (as the **PA-II** component), and with 40% by weight of a combination of an ionomer, such as the zinc neutralized salt of an ethylene copolymer selected from sub-category (i) of the category (**f-PO**), and a compatibilizer such as a copolymer derived from ethylene/n-butyl acrylate/glycidyl methacrylate selected from sub-category (ii) of the category (**f-PO**).

That is, 40% of the (**PA-II**) component has been substituted with the combination of ingredients drawn from the (**f-PO**) category, while holding the proportion of the (**PA-I**) in the final blend formulation constant at 30%. In every instance, the formulations disclosed herein may include antioxidants, heat stabilizers or mixtures thereof. Typically these comprise from about 0.05 to about 5.0% by weight, preferably from about 0.05 to about 2.0% by weight. Other optional ingredients may be selected from flame retardants, anti-blocking agents, slip additives, pigments or dyes, processing aids, plasticizers and ultraviolet blocking agents. These may be used in suitable quantities as are well-known to those skilled in the art.

A film may be cast from a melt blend of the above-mentioned formulation with relative ease. The film may be heat fused to itself, or to a fabric substrate, by conventional laminating means with relative ease, at a measured sealing temperature of approximately 220°C, as measured by the method to be described hereinbelow.

This measured sealing temperature is some 50°C above that displayed by the binary blend containing the same proportions of the higher melting polyamide, viz. 30% in the lower melting point polyamide. Thus the incorporation of selected low melting point "functionalized polyolefin" ingredients, by conventional thermoplastic blending means, leads to the creation of a multiphase polymer system, which when cast casting by conventional thermoplastic film casting means, creates a film of material with the properties of: high thermal barrier; hard surface characteristics (so-called "anti-blocking" characteristics), easy formability, strong self-adhesion, and strong adhesion to substrate materials such as fabrics.

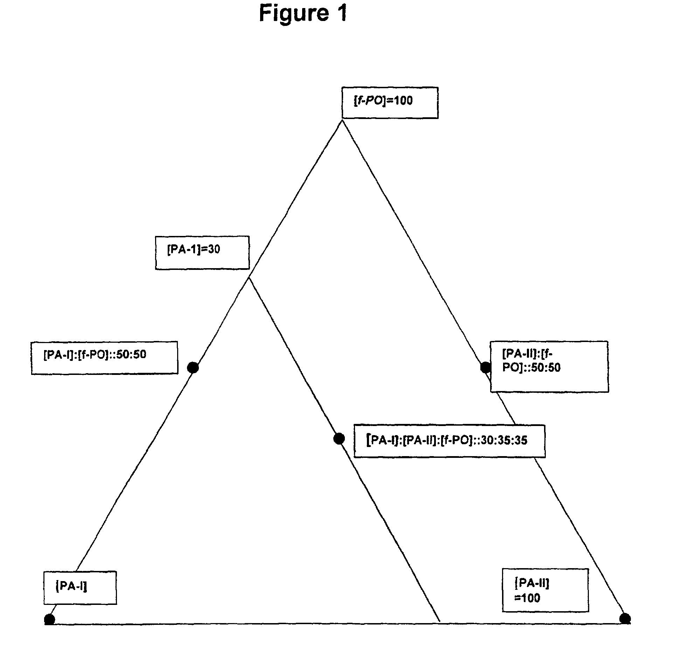

Two instances of the combination of the components drawn from the three categories (**PA-I**), (**PA-II**) and (**f-PO**), in order to create a binary and a tertiary system, have been cited above. These instances may be considered to belong to a continuum of polymeric systems, which can be represented on a conventional triangular composition diagram (Figure 1) in which the apexes are as shown in Table 1.

Table 1

| Apex location | System Designation | Key defining characteristics | Examples |
|---|---|---|---|
| **X** (lower left hand corner) | **PA-I** | sharp melting endotherm and melting points above 200°C | Polycaproamide |
| **Y** (lower right hand corner) | **PA-II** | broad melting endothermic characteristics and melting points below 200°C | Homopolymer of 2-methylpencamethylenediamine and dodecanedioic acid |
| **Z** (pinnacle) | **f-PO** | ethylene copolymer-based ionomers and/or compatibilizer | Zinc neutralized ethylene copolymer; copolymer of ethylene/n-butyl acrylate/glycidyl methacrylateacrylate/glycidyl methacrylate |

The tertiary composition diagram representation of the continuum of polymeric systems is shown in Figure 1 as noted.

The technology of tying together low melting elastomeric ethylene copolymers to high melting polyamide resins, in order to obtain synergistic combination of the properties of the two material categories is known to those skilled in the art. The application of the effect of imparting properties associated with "thermosets" to thermoplastics films, which are then used as layers in composite sheets as airbag materials (for example), has not been previously known.

The functionality imparted to the polymeric systems by the respective categories of components may be represented schematically as shown in the following Table 2.

Table 2

| Functionality | Contributing Categories |
|---|---|
| Thermal Barrier Properties | (**PA-I**) + (**f-PO**) |
| Formability and Adhesion | (**PA-II**) + (**f-PO**) |

This formalism supports the proposal that the polymer system compositions may be represented by the simple functional:

$$f(c) = \frac{[PA\text{-}I] + [f\text{-}PO]}{[PA\text{-}II] + [f\text{-}PO]}$$

$$([PA\text{-}I] + [PA\text{-}II] + [f\text{-}PO] = 1)$$

wherein **f(c)** = Composition Parameter; **PA-I**] = concentration of polyamide (**PAI**); [**PA-II**] = concentration of polyamide (**PA-II**); and [**f-PO**] = concentration of (**f-PO**). The values of the Composition Parameter, f(c), associated with the tertiary blend, and three binary blends, at nominal values of the compositions of these formulations comprising the blends, is shown in Table 3.

Table 3

| Formulation | Nominal values of the Compositions [%(w/w)] | | | f(c) |
|---|---|---|---|---|
| | [PA-I] | [PA-II] | [f-PO] | |
| Binary blend of (**PA-I**) and (**PA-II**) | 0.30 | 0.70 | 0.0 | 0.43 |
| Tertiary blend of (**PA-I**) and (**PA-IIA**) and (**f-PO**) | 0.30 | 0.30 | 0.40 | 1.0 |
| Binary blend of (**PA-II**) and (**f-PO**) | 0.0 | 0.50 | 0.50 | 0.5 |
| Binary Blend of (**PA-I**) and (**f-PO**) | 0.50 | 0.0 | 0.50 | 2.0 |

The form of the functional reflects the essential physics of the multiphase polymer systems. The (**f-PO**) component of the tertiary system is comprised of low melting point ethylene-based copolymer, or copolymers. It contributes dimensional stability and thermal and moisture resistance, through stabilization of micro-morphology, and it contributes desired macro- morphology for formability, anti-blocking. Hence the appearance of the [**f-PO**] term in the numerator of the parameter, with the "high temperature polyamide", and it appearance on the denominator of the parameter, with the low temperature polyamide. The parameter is in effect the compositional ratio of the high temperature contributors to the functionality of the multiphase system, to the low temperature contributors.

Practical limitations apply to the region of the continuum over which the functional relationship, given in Equation (1) applies, as follows:

a) a value of 1.0 does not have significant physical meaning at [**f-PO**] = 1.0 (i.e., at the pure (**f-PO**) apex);
b) nor does the value of 0 at [**PA-II**] = 1.0 have significance (i.e., pure (**PA-II**);
c) a mathematical singularity exists at [**PA-I**] =1.

Given the importance of the (**f-PO**) component to the functionality of the system, it is unlikely that values of the parameter along the [**f-PO**] =0 baseline have much significance, so that the range of (**f-PO**) compositions over which the functional parameter has significance is likely 0 < [**f-PO**] < approximately 0.5, over which the Composition Parameter takes values within the range of:

$$0 < f(c) < 2.0.$$

The values of the Composition Parameter, **f(c)** taken by formulations, located at different points on the Composition diagram of Figure 1, are illustrated in Figure 2.
The significance of the function **f(c)** is that it correlates with two parameters, which are key to the selection of airbag materials for use in given airbag applications, formed by thermal bonding of film to fabric:

a) the thermal resistance characteristics of the material;

b) the ease with which the film can be laminated.

This is illustrated for the case of the three formulations set out in Table 4 hereafter.

Table 4

| Formulation | Nominal f(c) range | Airbag Application - nominal thermal resistance range | Nominal Laminate Formability |
|---|---|---|---|
| Binary blend of (**PA-II**) and (**f-PO**) | $0 < \mathbf{f(c)} < 0.5$ | Low to Medium | High |
| Tertiary Blend | I | Medium to High | Medium |
| Binary Blend of (**PA-I**) and (**f-PO**) | $I < \mathbf{f(c)} < 2.5$ | High | Low |

Thus, contemplated in the present invention are new hybrid airbag structures for automotive passive restraint systems, which match, or exceed, the usefulness of those produced from silicone-coated fabrics. The means of formulating and fashioning them that offers the best "trade-off" between functionality in use (requirements to be met are defined by the inflation regimes), and the ease of manufacturing of the laminate (reflected in lamination process "window" width). All of this constitutes an advance in the airbag art.

In the event that an airbag material is to be selected for an application in which inflation is to be carried out by means of very hot inflation gases, then a film composed of a formulation with a high value of **f(c)** would be selected. Conversely, where low temperature inflation is to be employed, in which case advantage can be taken of the low requirement for thermal resistance to select a formulation with a broad lamination operating "window" at relatively low sealing temperatures, a low value of **f(c)** would be advised.

Tertiary multiphase polymer systems having a value of a composition-dependent performance index of approximately 1.0, that is formulations the films from which would display a good balance of thermal resistance and formability, are proposed for airbag materials to be used with conventional azide-based inflation systems.

In the method of the present invention, a means is contemplated of formulating multiphase polymer systems for conversion into films, preferably by casting, in film/fabric laminates as airbag materials, in a way that prescribed thermal characteristics are imparted for use in different inflation temperature regimes.

Inflation of an airbag is most commonly effected by ignition of the sodium azide propellent, for which the requirement of the material in contact with the gases offer thermal barrier protection against pyrotechnic damage, and penetration by hot particulates associated with incomplete combustion of the propellant. There are established trends towards inflation of airbags by "cool" gas systems, and by gases hotter than the nitrogen from the azide system, but cleaner, in not being contaminated by particulates.

**Methods of Manufacture**

Polymerization of the components of the categories comprising formulations, from which the film layer of the composite structure is made, follows well-established practices applying to polyamides and ethylene copolymers. If required, additives to the formulations may be incorporated by conventional means either at the polymerization or the product-forming stages, the choice of additive addition point depending upon known art.

The various ingredients comprising a formulation may be melt blended with each other under shear conditions, having first been blended together as solid ingredients, as pellets and/or powders, for example, or they may be incorporated through simultaneous or separate metering. It may prove advantageous for ingredients to be blended in one or more passes into one or more sections of mixing equipment such as an extruder, or mixers exemplified by Branbury, Buess Kneader or Ferrell continuous mixer equipment. As an example, for the purpose of promoting the grafting reactiori(s between the polymeric grafting component agent from sub-category (ii) of the (**f-PO**) category, and either or both of the thermoplastic components (**PA-I**) and (**PA-II**), the components from these categories may be first combined before the addition of the acid-containing copolymer of sub-category (i) of the (**f-PO**) category is added downstream. It should be noted that a cross-linked non-extrudable product would result if components from sub-categories (i) and (ii) of the (**f-PO**) category were added to a mixing device, such as an extruder, when a polyamide from categories (**PA-I**) and/or (**PA-II**) were not present.

The ingredients are properly dispersed by resort to high shear in mixing, in order to ensure that the grafting reactions proceed uniformly throughout the blend, and to achieve the desired morphology of the formed film. For example, it is known by those skilled in the art that the desired morphology is characterized by at least one of the continuous phases of the blend being the thermoplastic component of category (**PA-I**), and optionally of (**PA-II**).

Film formation may be by a cast or by a blown film process, both of which are known in the art of manufacture of thermoplastic films. The film may be mono- or multi-layered, the latter being formed for example by lamination or coextrusion. These films may be mono- or biaxially oriented. The properties of the films are related to factors such as extruder screw design, extrusion temperature and hold-up time, quenching rate and degree, the thickness of the film, and the nature and amount of additional ingredients present in the formulation as major components or additives. Film used to make the laminates of the present invention is typically 1 mil thick.

Lamination of the film to the fabric can be accomplished in a number of ways. One method is to pass the film and fabric through a set of heated nip rolls. Alternatively, by the application of extrusion coating art, a molten polymer may be extruded onto the fabric and allowed to solidify into a continuous film. By the application of powder coating art, a powder, which distributed onto the fabric substrate in a controlled fashion, may be melted, and then the polymeric layer so formed allowed to solidify.

The laminate may be cut and sewn using techniques used for conventionally coated fabrics. **US patent 5 529 340**, issued to Fairbanks on June 25, 1996, discloses a single pattern piece, which is sewn or seamed along cut edges of the pattern in a designated sequence to provide an airbag when fully inflated.

Where the structure of the composite sheet is that of a true laminate, that is, where the material of the contacting film layer, while forming a bond to the top fibers of the fabric substrate sufficiently strong to ensure that the requirements of the application are met, has not penetrated the voids of the fabric substrate to the extent of effectively integrating the materials of the film with those of the fabric, those skilled in the art could envision techniques to separate a film layer from a fabric substrate by mechanical means, optionally exploiting heat, but not resorting to the use of solvents to weaken chemical bonds.

Whereas the composite sheet material of the present invention is formed without recourse to an adhesive layer between the film and fabric substrate layers, the film layer, or layers, may be delaminated from fabric substrate by mechanical means, aided optionally by the application of heat. The object of the delamination is the separation of the film layer of the composite structure from the fabric substrate substantially without cross-contamination.

Deconstruction of the composite sheet could be carried out by a number of means. A process to separate the primary and secondary backing components of carpets is described in **US patent 5 230 473,** whereby the backing of a carpet is removed using rotating toothed rolls. An apparatus based upon this method could be envisioned whereby film is removed from fabric. A composite sheet as an airbag material could be slit and laid flat on a moving belt, during passage on which the film could be subjected to a high speed rotating pinned roll. The anticipated effect is that flakes of the film would be formed, which could be removed from the fabric substrate by suction. Alternatively, the composite sheet material could be ground into pieces small enough to liberate the film from the fibers, and then using density separation technologies, the film fragments could be classified from the fibers.

## EXAMPLES

The following examples illustrate various embodiments of the present invention and comprise the current forms thereof.

## TEST METHODS

The essential concept of adhering by thermal bonding a layer of thermoplastic film of a multiphase polymer system to a fabric substrate was confirmed by carrying out a number of experiments, which are illustrated in the Examples. The subjects of the illustrative Examples are listed below in Table 5.

Table 5

| Example No. | Description |
|---|---|
| 1 | Bond Strengths |
| 2 | Bonding Mechanism |
| 3 | Role of the Functionalized Polyolefins |
| 4 | Measured Sealing Temperature as a function of the Formuiation Composition |
| 5 | Melting Point Temperature and Measured Sealing Temperature Correlation with Seal and Film Quality |

Table 5   (continued)

| Example No. | Description |
|---|---|
| 6 | Laminating Operating Window |
| 7 | Effect of Laminating Conditions on Tensile Properties of the Films |

The polymer materials comprising formulations of the present invention are exemplified by, but not limited by, those listed in the following Table 6. These materials were used in the experimentation.

Table 6

| Category of Component | Component Name | Component Symbol | Source and Designation |
|---|---|---|---|
| (**PA-I**) | Polycaproamide | PA-6 | |
| (**PA-II**) | Homopolymer of 2-methylpentamethylenediami ne and dodecanedioic acid | PA-MPMD, DDDA | Batch polymerization |
| (**f-PO**) | Ionomer | | Surlyn |
| (**f-PO**) | Compatibilizer | EBAGMA | |

Table 7 lists the methods of fabricating and testing samples, which were used in the experimentation, reported in the Examples. These fabrication methods simulate at small-scale the methods of manufacture which have been described as being suitable for making composite sheet materials for Industrial application.
In the table, the Note numbers refer to notes following the Table 7.

Table 7

| Method No. | Method | Method Description | Note No. |
|---|---|---|---|
| 1 | Blending | Dry Pellet blending | |
| 2 | Extrusion | 0.8 inch twin-screw Welding Engineers extruder | 1 |
| 3 | Film Formation | Casting by chill roll quenching | 2 |
| 4 | Fabric Properties | Standard tests applying to uncoated fabrics for use as airbag materials | 3 |
| 5 | Lamination | Sencorp Sealer | 4 |
| 6 | Sealing Temperature | Jaw temperature set point | 5 |
| 7 | Bond Strength | Instron measurement | 6 |
| 8 | Sealing Temperature operating window | | 7 |
| 9 | Adhesion Mechanism | Scanning Electron Microscopy (SEM) and Optical microscopy | |
| 10 | Thermal Properties | DSC | |
| 11 | Film Physical Properties | Tensile strength and elongation to break | |

**Note 1: Extrusion Conditions**

The blends were extruded on 0.8 inch Welding Engineers non-intermeshing counter-rotating twin-screw extruder, having an LID of about 40, which was operated at melt temperatures appropriate to the processing of polycaproamide, PA-6.

**Note 2: Casting Conditions**

The melt was extruded through a 6 inch diameter flat die. The extrudate was quenched on a chill roll set at nominally temperatures within the range of 10°C to 15°C, to form films of approximately 1 mil thickness.

**Note 3: Properties of the Fabric Substrates**

Fabric structures which may serve as substrate materials for the composite sheets formed by the method of the present invention are exemplified by, but not limited by, those listed in the following Table 8. Two fabric substrates, plain woven from 420 denier and 630 denier filaments of polyhexamethyleneadipamide (PA-66), were used in the experimentation.

Table 8

| Property | Units | 420 denier fabric | 630 denier fabric |
|---|---|---|---|
| Weight | Ozlsq.yd | 5.61 | 7. 15 |
| Count - warp | Inches | 47.6 | 40.5 |
| Count - fill | Inches | 49 | 40.7 |
| Gauge | Mils | 12 | 13.3 |
| Tensile Strength - warp | Lbs | 505 | 717 |
| Tensile Strength - fill | Lbs | 498 | 740 |

**Note 4: Lamination**

In the lamination test, the sealing of the film to the fabric was carried out using a Sencorp heat sealer, the arrangement of which is shown schematically below:

| Lower jaw of Sencorp Sealer | Teflon film to protect heating element | Quick response TC | Teflon film to protect heating element | Upper jaw of Sencorp Sealer |
|---|---|---|---|---|

A quick response thermocouple and a HIOKI 8811 fast recorder were used to measure the temperatures which occur during the lamination of the film to fabric, and the heat transfer dynamics, in order to determine appropriate dwell times in sealing.
The sealing method is summarized as follows: a) both the upper and lower jaws of the sealer were heated continuously; the jaws were pre-heated by cycling the jaw closures; the dwell time was set at 0.5 seconds and a maximum jaw pressure of 62.5 psig..

**Note 5: Measurement of the Sealing Temperature**

The jaw set point is used to provide the "Measured Sealing Temperature" data consistently throughout the experimentation.
The surface temperature of the jaws on the Sencorp heat sealer was measured and compared to the set point: the surface temperature matched the set point to within +/- 1°C. A substantial temperature drop was observed to exist across the Teflon films on the jaw face. In calibration experiments, a difference of the order of 40°C was observed between jaw temperature set point and the temperature of the laminate between the Teflon films on the faces of the jaws.

**Note 6: Quantitative Bond Strength data was obtained**

The average force required to separate by peeling the film and fabric was measured on an Instron, having a crosshead speed was 12 inches/min, and having an initial jaw separation of 1 inch.

**Note 7: Estimation of the Sealing "Operating Window"**

Hand peeling of the laminates formed as the sealing temperature was incremented was used to locate the onset of the formation of a good bond, and therefore the lower limit of the sealing "Operating Window". Evidence of the onset of penetration of the material comprising the film layer into the fabric substrate was used to determine the upper limit of the sealing temperature range.

**Example 1**

The factor varied in the illustrated experiment is the film layer formulation. The bond strengths associated with three formulations related to the present invention are compared with the bond strengths associated with two reference polyamide systems: one of which is used extensively in adhesive formulations (generally solvent-based) of the type used in adhesive formulations for the bonding of sewing threads for athletic footwear; and, one that is not used as an adhesive.

Table 9 summarizes the experimental conditions. The methods employed in making film/fabric laminates on the Sencorp Sealer, and in carrying out the bond strength measurement, have been described in detail hereinabove.

Table 9

| Experimental Parameter | Experimental Condition |
|---|---|
| Lamination device | Sencorp sealer. |
| Laminate | 1 inch x 1 inch |
| Film Thickness | 1 mil |
| Substrate fabric | Made from 630 denier yarn |
| Jaw pressure | About 60 psi |
| Jaw heating mode | Top and bottom jaws |
| Dwell time | About 0.5 seconds |
| Measurement device | Instron. |
| Jaw speed | 12 inch/min |
| Initial jaw separation | 1 inch |

The results of the experiment are summarized in Table 10 below. The formulations related to the invention display good bond strengths relative to the recognized adhesive copolyamide, and to the polyamide not known for its adhesive properties.

Table 10

| Film layer formulation | Measured Sealing Temperature (°C) | Bond Strength (lbf) |
|---|---|---|
| **Formulations related to the Invention** | | |
| Tertiary blend | 250 | 1.11 |
| PA-MPMD,DDDA | 160 | 0.76 |
| Ionomer (Surlyn® 1857) | 160 | 1.52 |
| **Comparative formulations** | | |
| 70/30 Elvamide (blend) | 230 | 1.86 |
| Nylon 6 | 240 | 0.15 |

**Example 2**

Samples of laminates of two film formulations related to the present invention, on fabric of the 630 denier yarn, were immersed in liquid nitrogen then cut with a pair of scissors. The cut surface was then imaged using Scanning Electron Microscopy (SEM). The SEM images were confirmed by examination by light microscopy of samples, which were mounted into epoxy resin, cured and polished. The observations are summarized in Table 11.

Table 11

| Film layer formulation | Measured Sealing Temperature Range °C | Bond Strength (lbf) | Observed Lamination |
|---|---|---|---|
| PA-MPMD,DDDA | 140 - 160 | 0.76 | The film coats the top filaments of the top layer of yarn, without penetrating it. |
| Ionomer: Surlyn® 1857 | 140 - 160 | 1.52 | |

At lamination operating temperatures, below the sealing temperature range, little or no bonding was observed. Within the sealing temperature range, a bond formed, which resisted efforts to peel the film from the fabric. At temperatures above the sealing temperature range, was observed to flow into the interstices of the fabric, yielding a "monolayered" cloth. The observations are summarized in Table 12.

Table 12

| Lamination temperature relative to the Sealing Temperature Range | Lamination observation |
|---|---|
| Below | little or no bonding |
| Within | a bond formed, which resisted efforts to peel the film from the fabric |
| Above | the film, although not molten flowed into the interstices of the fabric, yielding a "monolayered" cloth |

**Example 3**

A series of 1 mil films were cast from formulations created by melt blending components from categories (**PA-I**) and (**PA-II**) in different proportions, and a series of 1 mil films were cast from formulations created by melt blending components from the categories (**PA-I**), (**PA-II**) and (**f-PO**) in different proportions. The specific components representative of these categories, which were used in the illustrating experiment are listed in Table 13.

Table 13

| Category | Component |
|---|---|
| (**PA-I**) | Polycaproamide (PA-6) |
| (**PA-II**) | Homopolymer of 2-methylpentamethylenediamine (PA-MPMD,DDDA) |
| (**f-PO**) | Ionomer: Surlyn® 9320; compatibilizer: EBAGMA, EP 4934-6 |

Results of the experimental series are summarized in Table 14

Table 14

| (PA-I) and (PA-II) Blends | | | Blends of (PA-I), (PA-II) and (f-PO) components | | | | |
|---|---|---|---|---|---|---|---|
| Parts (PA-II) | Parts (PA-I) | Film Quality | Parts (PA-II) | Parts (PA-I) | (PA-II):(PA-I) | Parts Ionomer: Compatibilizer in (f-PO) | Film Quality |
| 100 | 0 | Good | 60 | 0 | 100:0 | 33:7 | Good |
| 90 | 10 | Good | 54 | 6 | 90:10 | 33:7 | Good |
| 80 | 20 | Acceptable | 48 | 12 | 80:20 | 33:7 | Good |
| 70 | 30 | **Not Acceptable** | 42 | 18 | 70:30 | 33:7 | **Good** |
| 60 | 40 | **Not Acceptable** | 36 | 24 | 60:40 | 33:7 | **Good** |

Table 14 (continued)

| (PA-I) and (PA-II) Blends | | | Blends of (PA-I), (PA-II) and (f-PO) components | | | | |
|---|---|---|---|---|---|---|---|
| Parts (PA-II) | Par ts (PA -I) | Film Quality | Parts (PA-II) | Parts (PA- I) | (PA- II): (PA-I) | Parts Ionomer: Compatibilize r in (f-PO) | Film Quality |
| 50 | 50 | **Not Acceptable** | 30 | 30 | 50:50 | 33:7 | **Good** |
| 0 | 100 | Acceptable | 0 | 60 | 0:100 | 33:7 | Good |

The binary blends in the proportions [**PA-I**]:[**PA-II**]::30:70, 40:60 and 50:50 could not be made. "Bands" at the exit of the extruder evidenced poor mixing. When the ingredients of the (**f-PO**) category were added to the throat of the extruder, film quality improved and all blend proportions were cast. While the ethylene copolymer-based ingredients act to compatibilize the nylon blend, as indicated by the data in Table above, the presence of this component of the tertiary polymer system also served to raise the Measured Sealing Temperature of the formulation.

The sealing temperature of a binary blend, in which the (**PA-I**) component is present at 20%, has a value of 175°C. The sealing temperature of a tertiary blend, in which the (**PA-I**) component is present at 18%, while through substitution of (40/82) % of the (**PA-II**) component, the (**f-PO**) component is present at 40%, has a value of 210°C, as shown in Table 15.

Table 15

| Parts (PA- II) | Parts (PA-I) | Measured Sealing Temp. °C | Parts (PA-II) | Parts (PA-I) | % (PA-I) | Parts Ionomer: Compatibilizer in (f-PO) | Measured Sealing Temperature °C |
|---|---|---|---|---|---|---|---|
| 100 | 0 | 155 | 60 | 0 | 0 | 33:7 | 155 |
| | | | 54 | 6 | 6 | 33:7 | 165 |
| 90 | 10 | 165 | | | 10 | | |
| | | | 48 | 12 | 12 | 33:7 | 185 |
| | | | 42 | 18 | 18 | 33:7 | 210 |
| 80 | 20 | 175 | | | 20 | | |
| | | | 36 | 24 | 24 | 33:7 | 220 |
| 70 | 30 | Not Measured | | | 30 | | |
| | | | 30 | 30 | 30 | 33:7 | 230 |
| 60 | 40 | 230 | | | 40 | | |
| 50 | 50 | 235 | | | 50 | | |
| 0 | 100 | 245 | 0 | 60 | 60 | 33:7 | 240 |

As discussed previously, there is a substantial difference between the jaw temperature, referred to as the Measured Sealing Temperature in the data of the illustrative Examples, and the temperature reached by the film/fabric material during sealing. Since the jaw temperature was used throughout the experimentation, the data pertaining to the sealing temperature of the formulations is internally consistent.

**Example 4**

A series of 1 mil films were cast from formulations created by melt blending components from the categories (**PA-I**), (**PA-II**) and (**f-PO**) in different proportions. The specific components representative of these categories, which were used in the illustrating experiment are listed in Table 16.

Table 16

| Category | Component |
|----------|-----------|
| (**PA-I**) | Poiycaproamide (PA-6) |
| (**PA-II**) | Homopolymer of 2-methylpentamethylenediamine (PA-MPMD,DDDA) |
| (**f-PO**) | Ionomer: Surlyn® 9320; compatibilizer: EBAGMA, EP 4934-6 |

The polymer system compositions were represented by the simple functional, referred to as the Composition Parameter:

$$f(c) = \frac{[PA\text{-}I] + [f\text{-}PO]}{[PA\text{-}II] + [f\text{-}PO]}$$

$$([PA\text{-}I] + [PA\text{-}II] + [f\text{-}PO] = 1)$$

wherein:

  **f(c)** = Composition Parameter
  [**PA-I**] = concentration of polyamide (**PA-I**)
  [**PA-II**] = concentration of polyamide (**PA-II**)
  [**f-PO**] = concentration of (**f-PO**)

The computed values of the Composition Parameter associated with the formulations created, and the respective Measured sealing temperatures of the formulations, are shown in Table 17.

Table 17

| Parts (PA-II) | Parts (PA-I) | Parts Ionomer: Compatibilizer in (f-PO) | Composition Parameter f(c) | Measured Sealing Temperature (°C) |
|---------------|--------------|-----------------------------------------|----------------------------|------------------------------------|
| 54 | 6 | 33:7 | 0.49 | 165 |
| 48 | 12 | 33:7 | 0.59 | 185 |
| 42 | 18 | 33:7 | 0.71 | 210 |
| 36 | 24 | 33:7 | 0.84 | 220 |
| 30 | 30 | 33:7 | 1.0 | 230 |

For the sake of comparison, the computed Composition Parameter and the respective Measured Sealing Temperatures of two binary blends of the ingredients of the (**f-PO**) category first with the (**PA-I**) polyamide, and then the (**PA-II**) polyamide, are given in Table 18.

Table 18

| Parts D12 | Parts PA-6 | Parts Ionomer: Compatibilizer | Composition Parameter f (c) | Sealing Temperature °C |
|-----------|------------|-------------------------------|-----------------------------|------------------------|
| 0 | 60 | 33:7 | 2.5 | 240 |
| 60 | 0 | 33:7 | 0.40 | 155 |

**Example 5**

The factor varied in the illustrating Example is the nominal Melting Point of the polymer system comprising the film laminated to a fabric substrate. A thermal characteristic such as the nominal melting point would be of prime importance in selecting a formulation for a given application.

The data of Table 19 shows that the formulations related to the present invention formed good films, and a good quality of seal was achieved, at Measured Sealing Temperatures which varied in a linear, predictable fashion with the nominal Melting temperature of the polymer. The two homopolymer polyamides, referred to in Table 19 as PA-6 and PA-6,12, did not form seals of good quality.

Table 19

| Formulation | Melting Point Temperature (°C) | Measured Sealing Temperature (°C) | Seal Quality |
|---|---|---|---|
| Ionomer | 100 | 140 | Good - film is soft |
| PA-MPMD,DDDA | 145 | 160 | Good |
| PA-MPMD,DDDA:Ionomer: Compatibilizer ::60:33:7 | | 160 | Good |
| Homopolymer of hexamethylenediamine and dodecaridioic acid (PA-6,12) | 212 | 240 | Brittle |
| PA-6 | 220 | 240 | Brittle |
| PA-6:PA-MPMD,DDDA: Ionomer:Compatibilizer ::30: 30:30:7 (+ Additives @3%) | | 250 | Good |
| PA-6:Ionomer: Compatibilizer ::60:33:7 | | 250 | Fair |

**Example 6**

A series of one mil films were cast from formulations created by melt blending components from the three categories **(PA-I), (PA-II)** and **(f-PO)** in different proportions. Lamination of the films to the 420 denier fabric substrate was undertaken on the Sencorp sealer at a series of temperatures.

Hand peeling of the laminates, formed as the sealing temperature was incremented, was used to locate the onset of the formation of a good bond, and therefore the lower limit of the sealing "Operating Window". Evidence of the onset of penetration of the material comprising the film layer into the fabric substrate was used to determine the upper limit of the sealing temperature range.

The Results are indicated in Table 20. At a temperature at which the bond strength was noted to be poor, a "P" is assigned. Where good bond strength was evident, and it was apparent that a true laminate structure had been formed, an "L" is assigned. The appearance of good bond formation, while the actual bond strength was not apparently adequate, was indicated by assignment of "P to L", signifying transition from poor bond strength to the state wherein a true laminate is formed. Similarly, where adequate bond strength was evident, but there was indication that some of the material of the film layer had melted and penetrated into the voids of the fabric, a "L to M" is assigned. Where it was apparent that the material of the film layer had been melted by the sealing conditions, resulting in the formation of an integral film and fabric structure, in essence a monolayered structure, a "M" is assigned.

Table 20

| Formulation | | | Temperature (C) | | | | | | |
|---|---|---|---|---|---|---|---|---|---|
| Parts (PA- II) | Parts (PA-I) | Parts f-PO | 120 | 140 | 160 | 180 | 200 | 220 | 240 |
| 100 | 0 | 0:0 | P | P | L | L | M | M | M |
| 60 | 0 | 33:7 | P | P | L | L | L to M | L to M | L to M |
| 80 | 20 | 0:0 | P | P | P | P to L | L | L | L to M |
| 48 | 12 | 33:7 | P | P | P | P | P | P to L | L |
| 30 | 30 | 33:7 | P | P | P | P | P | P to L | L |

In moving down the rows of Table 20, the location of the lamination "Operating Window", as defined by the temperature range in which a true laminate is formed, is seen to trend from lower temperatures to higher temperatures. The values of the Composition Parameter, f(c), associated with the formulations moving down the rows of the table, increases from a value of zero associated with the formulation of row 1, to a value of 1.0 associated with the formulation of row 5.

**Example 7**

A series of one mil films were cast from formulations created by melt blending components from the three categories (**PA-I**), (**PA-II**) and (**f-PO**) in different proportions.

Three sets of experiments were carried: a) on virgin film, to serve as a "Control"; b) on film exposed to pressures and temperatures associated with lamination conditions; and, c) on film subjected to conditions associated with testing heat aging characteristics.

In part a) samples were cut from the roll, conditioned in the PT lab for 40 hours then subjected to tensile strength testing on the Instron.

The second experiment was intended to mimic the sealing process. A piece of film was sandwiched between two strips of Teflon (giving Jaw/Teflon/Teflon/film/Teflon/Teflon/Jaw), inserted in the Sencorp sealer and 'laminated' at conditions of 0.5 sec and maximum pressure (62.5 psig line pressure). A 4" x 1/2" sample was created from the film, for testing on the Instron. The use of the two strips of Teflon was intended to mimic the thermal resistance provided by the fabric, and to ensure that the film does not stick to the jaws of the Sencorp sealer.

The third experiment was intended to mimic the effect on the physical properties of the film of the application of heat only. Film was inserted into a hot air oven and then removed after a short time. The oven temperature was set to match the interface temperature measured in lamination. A low thermal inertia thermocouple was tapped to the film surface to monitor its temperature. Once the thermocouple reached the interface temperature, the film was removed from the oven.

Table 21

| Formulation | | | Tensile Properties | | | | | |
|---|---|---|---|---|---|---|---|---|
| | | | Film | | Laminated | | Heat-treated | |
| Parts PA-II | Parts PA-I | Parts f-PO | T | E | T | E | T | E |
| 100 | 0 | 0:0 | 5457 | 382 | 5590 | 95 | 6670 | 51 |
| 60 | 0 | 33:7 | 8379 | 420 | 5268 | 175 | 8060 | 397 |
| 80 | 20 | 0:0 | 6923 | 465 | 4413 | 390 | 7400 | 495 |
| 48 | 12 | 33:7 | 5886 | 369 | 3397 | 254 | 6640 | 405 |

It is apparent from the data displayed in Table 21 that the effect on the physical properties of film material, which has been subjected to conditions simulating those experienced by the film in lamination, is comparable to the effect on the physical properties of film material, which has been subjected to conditions associated with heat aging testing. Since the lamination conditions employed in the small-scale experimentation are severe, the process of forming a film and fabric composite structure by thermal laminating would not be expected to have a deleterious effect upon the strength of the film component of the structure.

The present invention provides a means of manufacturing a composite sheet material by thermal bonding without adhesives, in a way that balances meeting the requirements imposed by the different inflation temperature regimes, and the need to separate the layers of the composite for the purpose of pre- or post-consumer recovery of the layer materials without cross-contamination.

Those skilled in the art will recognize that many modifications and variations of the present invention are possible in light of the above teachings. It is therefore understood that within the scope of the appended claims, the invention may be practiced otherwise than as specifically described.

**Claims**

1. An airbag composite sheet material comprising a polymeric polyamide film bonded to a fabric, the polymeric polyamide film being selected from films having a melting point of less than 220°C, the polyamide of the polymeric film having at least some adjacent amide linkages along its polymer backbone, at least one pendant $C_1$-$C_3$ alkyl branch and at least one sequence of at least seven consecutive carbon atoms, and the fabric being selected from polyamides and polyesters.

2. The airbag composite sheet material as claimed in claim 1 wherein the polyamide of the polymeric film has a melting point in the range of from 100°C to 200°C.

3. The airbag composite sheet material as claimed in claim 2 wherein the polyamide polymeric film comprises a monolayer film of a blend of polyamides, a multilayer film of polyamides, or a coextruded film of polyamides.

4. The airbag composite sheet material as claimed in claim 1 wherein the polyamide polymeric film is selected from polyamide films having a melting point of less than 200°C and a degree of crystallinity less than that of nylon 66.

5. The airbag composite sheet material as claimed in Claim 1 wherein the polyamide is prepared from (a) at least one dicarboxylic acid and at least one diamine wherein the at least one dicarboxylic acid and/or the at least one diamine contain at least one pendant alkyl branch having one to three carbon atoms, and wherein the at least one dicarboxylic acid and/or the at least one diamine have a sequence of at least seven methylene groups;

   (b) at least one alpha, omega aminocarboxylic acid, having the formula of H2N-R1-COOH, in which R1 is an aliphatic moiety having at least seven methylene groups in sequence and one pendant alkyl branch having one to three carbon atoms;
   (c) at least one diamine and at least one nitrile selected from the group consisting of alpha, omega-amino alkylene nitriles and alpha omega alkylene dinitriles, wherein the diamine, nitrile and for dinitrile contain at least one pendant alkyl branch having one to three carbon atoms; and wherein the diamine, nitrite and /or dinitrile comprise at least seven methylene groups; or
   (d) mixtures of any of the monomers described in (a) - (c) above.

6. The airbag composite sheet material as claimed in Claim 5 wherein the other monomers used to prepare the polyamide of the present invention are selected from aromatic dicarboxylic acids, aromatic diamines, alicyclic dicarboxylic acids and alicyclic diamines.

7. The airbag composite sheet material as claimed in Claim 5 wherein the aromatic dicarboxylic acids are selected from terephthalic acid and isophthalic acids, the alicyclic dicarboxylic acid is 1,4-bismethylene cyclohexyl dicarboxylic acid., and the alicyclic diamine is 1,4-bismethylene diamino cyclohexane.

8. The airbag composite sheet material as claimed in Claim 5 wherein the polymeric film is based on copolymers and terpolymers of hexamethylene diamine, 2-methylpentamethylene diamine, adipic acid, dodecanedioic acid and epsilon-caprolactam (nylon 6).

9. The airbag composite sheet material as claimed in claim 1 consisting of a fabric substrate laminated to a polymeric film layer, wherein the film layer is formed from a multiphase polymer system comprising:

   at least one linear aliphatic polyamide resin (**PA-I**), having a narrow melting point temperature range, a melting point in excess of 200 degrees C, and a molecular weight of at least 5000;
   at least one polyamide resin (**PA-II**) comprising at least one pendant alkyl branch having 1 to 3 carbon atoms within at least two amide linkages along the polymer backbone and at least one sequence of at least seven consecutive carbon atoms, excluding carbon atoms in pendant alkyl branches, if any, within at least two amide linkages along the polymer backbone, the melting point of the polyamide being less than 200°C;

   at least one of component (**f-PO**) which comprises at least one of:

   (i) an ethylene copolymer, E/X/Y, where E is ethylene and is at least 50 % by weight of E/X/Y, X is from 1-35 % by weight of an acid containing unsaturated mono-carboxylic acid, and Y is 0-49 % by weight of a moiety derived from at least one alkyl acrylate, alkyl methacrylate, alkyl vinyl ether, carbon monoxide, sulfur dioxide, or mixtures thereof where the alkyl groups contain 1-12 carbon atoms, and further wherein the acid groups in the acid-containing moiety are neutralized from 0-100% by weight of a metal ion;
   (ii) a polymeric grafting agent which contains reactive groups selected from at least one of epoxides, isocyanates, aziridines, silanes, alkyl halides, alpha-halo ketones and aldehydes, or oxazoline, which reacts with the acid-containing moieties in component i) and additionally reacts with the graft sites of components (**PA-I**) and (**PA-II**), and the weight percent of the monomer(s) containing the reactive groups is 0.5-15 weight percent of the polymeric grafting agent, and the remainder of the polymeric grafting agent contains at least 50 % by weight of ethylene and from 0-49 % by weight of a moiety derived from at least one alkyl acrylate, alkyl methacrylate, alkyl vinyl ether, carbon monoxide, sulfur dioxide, or mixtures thereof where the alkyl groups contain 1-12 carbon atoms; and
   (iii) at least one $C_2$-$C_{20}$ polyolefin selected from polyethylene, polypropylene, ethylene propylene diene terpolymer, copolymers of ethylene with vinyl acetate, carbon monoxide, or ethylenically unsaturated carboxylic acids or esters thereof upon which are grafted from about 0.05 to about 5% by weight of monomers or mixtures of monomers selected from ethylenically unsaturated acidic monomers or their derivatives including acrylic acid, methacrylic acid, maleic acid, fumaric acid, itaconic acid, crotonic acid, 5-norborene-2,3-dicarboxylic acid, maleic anhydride, monomethyl fumarate and monomethyl maleate; and from ethylenically unsaturated monomers containing amino or hydroxy functional groups including vinyl pyridines, vinyl silanes, 4-vinyl pyridine, vinyltriethyloxysilane and allyl alcohol;

wherein the composition of the polymer system comprising the film layer is **characterized by** the functional:

$$f(c)= \{[PA-I] + [f-PO]\}/\{[PA-II] + [f-PO]\}$$

$$([PA-I] + [PA-II] + [f-PO] = 1)$$

wherein **f(c)** = Composition Parameter; [**PA-I**] = concentration of polyamide (**PA-I**); [**PA-II**] = concentration of polyamide (**PA-II**); [**f-PO**] = concentration of (**f-PO**); and **f(c)** has values in the range of approximately 0.5 to approximately 2.0; and the numerator principally determines the thermal barrier properties of the film and the denominator principally determines the temperature for laminating the film layer to the fabric substrate.

10. The airbag composite sheet material as claimed in claim 9 wherein approximately equal amounts of **PA-I**, **PA-II** and **f-PO** are combined to form the film.

11. The airbag composite sheet material as claimed in claim 9 wherein the fabric is made of polyamide or polyester filaments or yarn and may be woven or non-woven or knitted.

12. The airbag composite sheet material as claimed in claim 9 wherein the film is a monolayer or a multilayer film that is cast or blown or oriented and is laminated or extruded.

13. The airbag composite sheet material as claimed in Claim 9 which comprises multiple layers of film and fabric including layers of film laminated to film layers.

14. A laminating process for making an airbag composite sheet material as claimed in Claim 9, wherein the laminating temperature is determined in accordance with the functional **f(c)** as defined therein, and wherein the film properties do not deteriorate and a true laminate is obtained.

15. A method for making an airbag for use in a passive restraint system which comprises constructing an airbag from a composite sheet material as claimed in claim 9 by cutting and sewing the composite sheet material in accordance with a desired airbag configuration.

16. A method for recovering the components of the airbag composite sheet material as claimed in claim 9 wherein the material may be mechanically delaminated using thermal means, if necessary and with substantially no cross contamination of the components.

17. A method for recovering the components of the airbag composite sheet material as claimed in claim 9 which comprises disassembling the material from its inflation module, when required; deconstructing the airbag structure, as needed; subjecting the material to a mechanical delamination process, optionally including thermal delamination means; and recovering the film and fabric components with substantially no cross contamination thereof for recycling.

18. An airbag constructed of an airbag composite sheet material as claimed in Claim 9.

19. A passive restraint system comprising an airbag as claimed in Claim 18.

20. A method for selecting the formulation of a polymer system for a film to be used in a composite sheet material wherein the composition of the polymer system is as claimed in Claim 9 and is selected to impart functionality to the resulting film in accordance with the functional **f(c)** and wherein **f(c)** has values selected to produce a composite sheet material that is a true laminate with sufficient strength to meet the composite sheet requirements.

**21.** An airbag composite sheet material as claimed in Claim 9 consisting of a fabric substrate laminated to a polymeric film layer, wherein the film layer is formed from a multiphase polymer system comprising

from at least about 10 % by weight to about 90 % by weight of at least one linear aliphatic polyamide resin (**PA-I**), having a narrow melting point temperature range, a melting point in excess of 200 degrees C, and a molecular weight of at least 5000; and

from at least about 10 % by weight to about 90 % by weight of at least one polyamide resin (**PA-II**) comprising at least one pendant alkyl branch having 1 to 3 carbon atoms within at least two amide linkages along the polymer backbone and at least one sequence of at least seven consecutive carbon atoms, excluding carbon atoms in pendant alkyl branches, if any, within at least two amide linkages along the polymer backbone, the melting point of the polyamide being less than 200°C.

**22.** The airbag composite sheet material as claimed in Claim 9 consisting of a fabric substrate laminated to a polymeric film layer, wherein the film layer is formed from a multiphase polymer system comprising

from at least about 10 % by weight to about 90 % by weight of at least one linear aliphatic polyamide resin (**PA-I**), having a narrow melting point temperature range, a melting point in excess of 200 degrees C, and a molecular weight of at least 5000; and

from about 10 % by weight to about 90 % by weight of at least one of component (**f-PO**) which comprises at least one of (i) an ethylene copolymer, E/X/Y, where E is ethylene and is at least about 50 % by weight of E/X/Y, X is from about lto about 35 % by weight of an acid containing unsaturated mono-carboxylic acid, and Y is 0 to about 49 % by weight of a moiety derived from at least one alkyl acrylate, alkyl methacrylate, alkyl vinyl ether, carbon monoxide, sulfur dioxide, or mixtures thereof where the alkyl groups contain 1-12 carbon atoms, and further wherein the acid groups in the acid-containing moiety are neutralized from 0 to about 100% by weight of a metal ion;

(ii) a polymeric grafting agent which contains reactive groups selected from at least one of epoxides, isocyanates, aziridines, silanes, alkyl halides, alpha-halo ketones and aldehydes, or oxazoline, which reacts with the acid-containing moieties in component i) and additionally reacts with the graft sites of components (**PA-I**) and (**PA-II**), and the weight percent of the monomer(s) containing the reactive groups is from about 0.5 to about 15 weight percent of the polymeric grafting agent, and the remainder of the polymeric grafting agent contains at least about 50 % by weight of ethylene and from 0 to about 49 % by weight of a moiety derived from at least one alkyl acrylate, alkyl methacrylate, alkyl vinyl ether, carbon monoxide, sulfur dioxide, or mixtures thereof where the alkyl groups contain 1-12 carbon atoms; and

(iii) at least one $C_2$-$C_{20}$ polyolefin selected from polyethylene, polypropylene, ethylene propylene diene terpolymer, copolymers of ethylene with vinyl acetate, carbon monoxide, or ethylenically unsaturated carboxylic acids or esters thereof upon which are grafted from about 0.05 to about 5 % by weight of monomers or mixtures of monomers selected from ethylenically unsaturated acidic monomers or their derivatives including acrylic acid, methacrylic acid, maleic acid, fumaric acid, itaconic acid, crotonic acid, 5-norborene-2,3-dicarboxylic acid, maleic anhydride, monomethyl fumarate and monomethyl maleate; and from ethylenically unsaturated monomers containing amino or hydroxy functional groups including vinyl pyridines, vinyl silanes, 4-vinyl pyridine, vinyltriethyloxysilane and allyl alcohol.

**23.** The airbag composite sheet material as claimed in Claim 9 consisting of a fabric substrate laminated to a polymeric film layer, wherein the film layer is formed from a multiphase polymer system comprising:

at least one polyamide resin (**PA-II**) comprising at least one pendant alkyl branch having 1 to 3 carbon atoms within at least two amide linkages along the polymer backbone and at least one sequence of at least seven consecutive carbon atoms, excluding carbon atoms in pendant alkyl branches, if any, within at least two amide linkages along the polymer backbone, the melting point of the polyamide being less than 200°C; and

at least one of component (**f-PO**) which comprises at least one of:

(i) an ethylene copolymer, EIX/Y, where E is ethylene and is at least 50 % by weight of E/X/Y, X is from 1-35 % by weight of an acid containing unsaturated mono-carboxylic acid, and Y is 0-49 % by weight of a moiety derived from at least one alkyl acrylate, alkyl methacrylate, alkyl vinyl ether, carbon monoxide, sulfur dioxide, or mixtures thereof where the alkyl groups contain 1-12 carbon atoms, and further wherein the acid groups in the acid-containing moiety are neutralized with from 0-100% by weight of a metal ion;

(ii) a polymeric grafting agent which contains reactive groups selected from at least one of epoxides, isocyanates, aziridines, silanes, alkyl halides, alpha-halo ketones and aldehydes, or oxazoline, which reacts with the acid-containing moieties in component i) and additionally reacts with the graft sites of components (**PA-I**) and (**PA-II**), and the weight percent of the monomer(s) containing the reactive groups is 0.5-15 weight percent of the polymeric grafting agent, and the remainder of the polymeric grafting agent contains at least 50 % by weight of ethylene and from 0-49 % by weight of a moiety derived from at least one alkyl acrylate, alkyl methacrylate, alkyl vinylether, carbon monoxide, sulfur dioxide, or mixtures thereof where the alkyl groups contain 1-12 carbon atoms; and

(iii) at least one $C_2$-$C_{20}$ polyolefin selected from polyethylene, polypropylene, ethylene propylene diene terpolymer, copolymers of ethylene with vinyl acetate, carbon monoxide, or ethylenically unsaturated carboxylic acids or esters thereof upon which are grafted from about 0.05 to about 5% by weight of monomers or mixtures of monomers selected from ethylenically unsaturated acidic monomers or their derivatives including acrylic acid, methacrylic acid, maleic acid, fumaric acid, itaconic acid, crotonic acid, 5-norborene-2,3-dicarboxylic acid, maleic anhydride, monomethyl fumarate and monomethyl maleate; and from ethylenically unsaturated monomers containing amino or hydroxy functional groups including vinyl pyridines, vinyl silanes, 4-vinyl pyridine, vinyltriethyloxysilane and allyl alcohol.

24. The airbag composite sheet material as claimed in Claim 21, 22 or 23 wherein the material is used to construct an airbag for use in a passive restraint system.

## Patentansprüche

1. Airbag-Verbundschichtmaterial, umfassend einen an ein Gewebe gebundenen Polyamidpolymerfilm, wobei der Polyamidpolymerfilm aus Filmen mit einem Schmelzpunkt von weniger als 220°C ausgewählt ist, wobei das Polyamid des Polymerfilms mindestens einige benachbarte Amidbindungen entlang seines Polymergrundgerüsts, mindestens eine anhängende $C_1$-$C_3$-Alkylverzweigung und mindestens eine Sequenz von mindestens sieben aufeinanderfolgenden Kohlenstoffatomen aufweist und wobei das Gewebe aus Polyamiden und Polyestern ausgewählt ist.

2. Airbag-Verbundschichtmaterial nach Anspruch 1, wobei das Polyamid des Polymerfilms einen Schmelzpunkt in dem Bereich von 100°C bis 200°C hat.

3. Airbag-Verbundschichtmaterial nach Anspruch 2, wobei der Polyamidpolymerfilm einen Monoschichtfilm aus einem Gemisch von Polyamiden, einen Mehrschichtfilm aus Polyamiden oder einen coextrudierten Film aus Polyamiden umfaßt.

4. Airbag-Verbundschichtmaterial nach Anspruch 1, wobei der Polyamidpolymerfilm aus Polyamidfilmen mit einem Schmelzpunkt von weniger als 200°C und einem Kristallinitätsgrad von weniger als dem von Nylon 66 ausgewählt ist.

5. Airbag-Verbundschichtmaterial nach Anspruch 1, wobei das Polyamid hergestellt wird aus (a) mindestens einer Dicarbonsäure und mindestens einem Diamin, wobei die mindestens eine Dicarbonsäure und/oder das mindestens eine Diamin mindestens eine anhängende Alkylverzweigung mit ein bis drei Kohlenstoffatomen enthalten und wobei die mindestens eine Dicarbonsäure und/oder das mindestens eine Diamin eine Sequenz von mindestens sieben Methylengruppen aufweisen;

(b) mindestens einer alpha,omega-Aminocarbonsäure mit der Formel $H_2N$-$R^1$-COOH, in welcher $R^1$ eine aliphatische Einheit mit mindestens sieben Methylengruppen in Sequenz und einer anhängenden Alkylverzweigung mit ein bis drei Kohlenstoffatomen ist;
(c) mindestens einem Diamin und mindestens einem Nitril, ausgewählt aus der Gruppe, bestehend aus alpha,omega-Aminoalkylennitrilen und alpha,omega-Alkylendinitrilen, wobei das Diamin, Nitril und/oder Dinitril mindestens eine anhängende Alkylverzweigung mit ein bis drei Kohlenstoffatomen enthalten; und wobei das Diamin, Nitril und/oder Dinitril mindestens sieben Methylengruppen umfassen; oder
(d) Gemischen beliebiger der vorstehend in (a) - (c) beschriebenen Monomere.

6. Airbag-Verbundschichtmaterial nach Anspruch 5, wobei die anderen Monomere, die verwendet werden, um das Polyamid der vorliegenden Erfindung herzustellen, aus aromatischen Dicarbonsäuren, aromatischen Diaminen, alicyclischen Dicarbonsäuren und alicyclischen Diaminen ausgewählt sind.

7. Airbag-Verbundschichtmaterial nach Anspruch 5, wobei die aromatischen Dicarbonsäuren aus Terephthalsäure und Isophthalsäure ausgewählt sind, die alicyclische Dicarbonsäure 1,4-Bismethylencyclohexyldicarbonsäure ist und das alicyclische Diamin 1,4-Bismethylendiaminocyclohexan ist.

8. Airbag-Verbundschichtmaterial nach Anspruch 5, wobei der Polymerfilm auf Copolymeren und Terpolymeren von Hexamethylendiamin, 2-Methylpentamethylendiamin, Adipinsäure, Dodecandicarbonsäure und epsilon-Caprolactam (Nylon 6) basiert.

9. Airbag-Verbundschichtmaterial nach Anspruch 1, bestehend aus einem Gewebesubstrat, laminiert auf eine Polymerfilmschicht, wobei die Filmschicht aus einem Mehrphasenpolymersystem erzeugt ist, umfassend:

mindestens ein lineares aliphatisches Polyamidharz (**PA-I**) mit einem schmalen Temperaturbereich des Schmelzpunkts, einem Schmelzpunkt über 200 Grad C und einem Molekulargewicht von mindestens 5000;

mindestens ein Polyamidharz (**PA-II**), umfassend mindestens eine anhängende Alkylverzweigung mit 1 bis 3 Kohlenstoffatomen innerhalb mindestens zwei Amidbindungen entlang des Polymergrundgerüsts und mindestens eine Sequenz von mindestens sieben aufeinanderfolgenden Kohlenstoffatomen, ausschließlich Kohlenstoffatome in anhängenden Alkylverzweigungen, sofern vorhanden, innerhalb mindestens zwei Amidbindungen entlang des Polyrnergrundgerüsts, wobei der Schmelzpunkt des Polyamids weniger als 200°C beträgt;

mindestens einer Komponente (**f-PO**), welche umfaßt mindestens eines von:

(i) einem Ethylencopolymer, E/X/Y, wobei E Ethylen ist und mindestens 50 Gew.-% von E/X/Y ausmacht, X von 1-35 Gew.-% einer säurehaltigen ungesättigten Monocarbonsäure sind und Y 0-49 Gew.-% einer Einheit, abgeleitet von mindestens einem Alkylacrylat, Alkylmethacrylat, Alkylvinylether, Kohlenmonoxid, Schwefeldioxid oder Gemischen davon, sind, wobei die Alkylgruppen 1-12 Kohlenstoffatome enthalten und wobei weiterhin die Säuregruppen in der säurehaltigen Einheit von 0-100 Gew.-% eines Metallions neutralisiert sind;

(ii) einem polymeren Pfropfungsmittel welches reaktive Gruppen enthält, ausgewählt aus mindestens einem von Epoxiden, Isocyanaten, Aziridinen, Silanen, Alkylhalogeniden, alpha-Halogenketonen und -aldehyden oder Oxazolin, welches mit den säurehaltigen Einheiten in Komponente i) reagiert und zusätzlich mit den Pfropfstellen der Komponenten (**PA-I**) und (**PA-II**) reagiert, und die Gewichtsprozent des (der) die reaktiven Gruppen enthaltenden Monomers(e) 0,5 bis 15 Gewichtsprozent des polymeren Pfropfungsmittels betragen und der Rest des polymeren Pfropfungsmittels mindestens 50 Gew.-% Ethylen und von 0-49 Gew.-% einer Einheit, abgeleitet von mindestens einem Alkylacrylat, Alkylmethacrylat, Alkylvinylether, Kohlenmonoxid, Schwefeldioxid oder Gemischen davon, enthält, wobei die Alkylgruppen 1-12 Kohlenstoffatome enthalten; und

(iii) mindestens einem $C_2$-$C_{20}$-Polyolefin, ausgewählt aus Polyethylen, Polypropylen, Ethylen-Propylen-Dien-Terpolymer, Copolymeren von Ethylen mit Vinylacetat, Kohlenmonoxid oder ethylenisch ungesättigten Carbonsäuren oder Estern davon, auf welche von etwa 0,05 bis etwa 5 Gew.-% Monomere oder Gemische von Monomeren, ausgewählt aus ethylenisch ungesättigten sauren Monomeren oder ihren Derivaten, einschließlich Acrylsäure, Methacrylsäure, Maleinsäure, Fumarsäure, Itaconsäure, Crotonsäure, 5-Norbonnen-2,3-dicarbonsäure, Maleinsäureanhydrid, Monomethylfumarat und Monomethylmaleat; und aus ethylenisch ungesättigten Monomeren, enthaltend amino- oder hydroxyfunktionelle Gruppen, einschließlich Vinylpyridinen, Vinylsilanen, 4-Vinylpyridin, Vinyltriethyloxysilan und Allylalkohol, aufgepfropft sind;

wobei die Zusammensetzung des die Filmschicht umfassenden Polymersystems durch das Funktional **gekennzeichnet** ist:

$$f(c) = \{[PA\text{-}I] + [f\text{-}PO]\} / \{[PA\text{-}II] + [f\text{-}PO]\}$$

$$([PA\text{-}I] + [PA\text{-}II] + [f\text{-}PO] = 1)$$

wobei **f(c)** = Parameter der Zusammensetzung; [**PA-I**] = Konzentration des Polyamids (**PA-I**); [**PA-II**] = Konzentration des Polyamids (**PA-II**); [**f-PO**] Konzentration von (**f-PO**); und **f(c)** Werte im Bereich von ungefähr 0,5 bis ungefähr 2,0 hat; und der Zähler hauptsächlich die Wärmesperreigenschaften des Films bestimmt und der Nenner hauptsächlich die Temperatur für die Laminierung der Filmschicht auf das Gewebesubstrat bestimmt.

**10.** Airbag-Verbundschichtmaterial nach Anspruch 9, wobei ungefähr gleiche Mengen von **PA-I**, **PA-II** und **f-PO** kombiniert werden, um den Film zu erzeugen.

**11.** Airbag-Verbundschichtmaterial nach Anspruch 9, wobei das Gewebe aus Polyamid- oder Polyesterfilamenten oder -garn hergestellt ist und gewebt oder vliesartig oder gestrickt sein kann.

**12.** Airbag-Verhundschichtmaterial nach Anspruch 9, wobei der Film ein Monoschicht- oder ein Mehrschichtfilm ist, der gegossen oder geblasen oder ausgerichtet ist und laminiert oder extrudiert ist.

**13.** Airbag-Verbundschichtmaterial nach Anspruch 9, welches mehrfache Schichten von Film und Gewebe einschließlich Schichten von Film, laminiert auf Filmschichten, umfaßt.

**14.** Laminierungsverfahren zur Herstellung eines Airbag-Verbundschichtmaterials nach Anspruch 9, wobei die Laminierungstemperatur entsprechend dem wie darin definierten Funktional **f(c)** bestimmt wird und wobei die Filmeigenschaften sich nicht verschlechtern und ein echtes Laminat erhalten wird.

**15.** Verfahren zur Herstellung eines Airbags zur Verwendung in einem passiven Rückhaltesystem, welches Herstellen eines Airbags aus einem Verbundschichtmaterial nach Anspruch 9 durch Schneiden und Nähen des Verbundschichtmaterials entsprechend einer gewünschten Airbag-Konfiguration umfaßt.

**16.** Verfahren zum Wiedergewinnen der Komponenten des Airbag-Verbundschichtmaterials nach Anspruch 9, wobei das Material mechanisch unter Verwendung thermischer Mittel, wenn notwendig, und mit im wesentlichen keiner wechselseitigen Verunreinigung der Komponenten delaminiert werden kann.

**17.** Verfahren zum Wiedergewinnen der Komponenten des Airbag-Verbundschichtmaterials nach Anspruch 9, welches Auseinandernehmen des Materials aus seinem Aufblasmodul, wenn erforderlich; Abbauen der Airbagstruktur, wie benötigt; Unterwerfen des Materials einem mechanischen Delaminierungsverfahren, gegebenenfalls unter Einschluß thermischer Delaminierungsmittel; und Wiedergewinnen der Film- und Gewebekomponenten mit im wesentlichen keiner wechselseitigen Verunreinigung davon zum Wiederverwenden umfaßt.

**18.** Airbag, hergestellt aus einem Airbag-Verbundschichtmaterial nach Anspruch 9.

**19.** Passives Rückhaltesystem, umfassend ein Airbag nach Anspruch 18.

**20.** Verfahren zum Auswählen der Formulierung eines Polymersystems für einen Film, der in einem Verbundschichtmaterial verwendet werden soll, wobei die Zusammensetzung des Polymersystems wie nach Anspruch 9 ist und ausgewählt ist, um dem resultierenden Film Funktionalität entsprechend dem Funktional **f(c)** zu vermitteln, und wobei **f(c)** Werte hat, ausgewählt, um ein Verbundschichtmaterial zu erzeugen, das ein echtes Laminat mit ausreichend Festigkeit, um den Anforderungen an die Verbundschicht zu entsprechen, ist.

**21.** Airbag-Verbundschichtmaterial nach Anspruch 9, bestehend aus einem Gewebesubstrat, laminiert auf eine Polymerfilmschicht, wobei die Filmschicht aus einem Mehrphasenpolymersystem erzeugt ist, umfassend
von mindestens etwa 10 Gew.-% bis etwa 90 Gew.-% von mindestens einem linearen aliphatischen Polyamidharz (**PA-I**) mit einem schmalen Temperaturbereich des Schmelzpunkts, einem Schmelzpunkt über 200 Grad C und einem Molekulargewicht von mindestens 5000; und
von mindestens etwa 10 Gew.-% bis etwa 90 Gew.-% von mindestens einem Polyamidharz (**PA-II**), umfassend mindestens eine anhängende Alkylverzweigung mit 1 bis 3 Kohlenstoffatomen innerhalb mindestens zwei Amidbindungen entlang des Polymergrundgerüsts und mindestens einer Sequenz von mindestens sieben aufeinanderfolgenden Kohlenstoffatomen, ausschließlich Kohlenstoffatome in anhängenden Alkylverzweigungen, sofern vorhanden, innerhalb mindestens zwei Amidbindungen entlang des Polymergrundgerüsts, wobei der Schmelzpunkt des Polyamids weniger als 200°C beträgt.

**22.** Airbag-Verbundschichtmaterial nach Anspruch 9, bestehend aus einem Gewebesubstrat, laminiert auf eine Polymerfilmschicht, wobei die Filmschicht aus einem Mehrphasenpolymersystem erzeugt ist, umfassend
von mindestens etwa 10 Gew.-% bis etwa 90 Gew.-% mindestens eines linearen aliphatischen Polyamidharzes (**PA-I**) mit einem schmalen Temperaturbereich des Schmelzpunkts, einem Schmelzpunkt über 200 Grad C und einem Molekulargewicht von mindestens 5000; und
von etwa 10 Gew.-% bis etwa 90 Gew.-% mindestens einer Komponente (**f-PO**), welche umfaßt

mindestens eines von (i) einem Ethylencopolymer, E/X/Y, wobei E Ethylen ist und mindestens etwa 50 Gew.-% von E/X/Y ausmacht, X von etwa 1 bis etwa 35 Gew.-% einer Säure, enthaltend ungesättigte Monocarbonsäure, sind und Y 0 bis etwa 49 Gew.-% einer Einheit, abgeleitet von mindestens einem Alkylacrylat, Alkylmethacrylat, Alkylvinylether, Kohlenmonoxid, Schwefeldioxid oder Gemischen davon, sind, wobei die Alkylgruppen 1-12 Kohlenstoffatome enthalten, und wobei weiterhin die Säuregruppen in der säurehaltigen Einheit von 0 bis etwa 100 Gew.-% eines Metallions neutralisiert sind;

(ii) einem polymeren Pfropfungsmittel, welches reaktive Gruppen enthält, ausgewählt aus mindestens einem von Epoxiden, Isocyanaten, Aziridinen, Silanen, Alkylhalogeniden, alpha-Halogenketonen und Aldehyden, oder Oxazolin, welches mit den säurehaltigen Einheiten in Komponente i) reagiert und zusätzlich mit den Pfropfstellen der Komponenten (**PA-I**) und (**PA-II**) reagiert, und die Gewichtsprozent des (der) die reaktiven Gruppen enthaltenden Monomers(e) von etwa 0,5 bis etwa 15 Gewichtsprozent des polymeren Pfropfungsmittels betragen und der Rest des polymeren Pfropfungsmittels mindestens etwa 50 Gew.-% Ethylen und von 0 bis etwa 49 Gew.-% einer Einheit, abgeleitet von mindestens einem Alkylacrylat, Alkylmethacrylat, Alkylvinylether, Kohlenmonoxid, Schwefeldioxid oder Gemischen davon, enthält, wobei die Alkylgruppen 1-12 Kohlenstoffatome enthalten; und

(iii) mindestens einem $C_2$-$C_{20}$-Polyolefin, ausgewählt aus Polyethylen, Polypropylen, Ethylen-Propylen-Dien-Terpolymer, Copolymeren von Ethylen mit Vinylacetat, Kohlenmonoxid oder ethylenisch ungesättigten Carbonsäuren oder Estern davon, auf welche von etwa 0,05 bis etwa 5 Gew.-% Monomere oder Gemische von Monomeren, ausgewählt aus ethylenisch ungesättigten sauren Monomeren oder ihren Derivaten, einschließlich Acrylsäure, Methacrylsäure, Maleinsäure, Fumarsäure, Itaconsäure, Crotonsäure, 5-Norbonnen-2,3-dicarbonsäure, Maleinsäureanhydrid, Monomethylfumarat und Monomethylmaleat; und aus ethylenisch ungesättigten Monomeren, enthaltend amino- oder hydroxyfunktionelle Gruppen, einschließlich Vinylpyridinen, Vinylsilanen, 4-Vinylpyridin, Vinyltriethyloxysilan und Allylalkohol, aufgepfropft sind.

23. Airbag-Verbundschichtmaterial nach Anspruch 9, bestehend aus einem Gewebesubstrat, laminiert auf eine Polymerfilmschicht, wobei die Filmschicht aus einem Mehrphasenpolymersystem erzeugt ist, umfassend

mindestens ein Polyamidharz (**PA-II**), umfassend mindestens eine anhängende Alkylverzweigung mit 1 bis 3 Kohlenstoffatomen innerhalb mindestens zwei Amidbindungen entlang des Polymergrundgerüsts und mindestens eine Sequenz von mindestens sieben aufeinanderfolgenden Kohlenstoffatomen, ausschließlich Kohlenstoffatome in anhängenden Alkylverzweigungen, sofern vorhanden, innerhalb mindestens zwei Amidbindungen entlang des Polymergrundgerüsts, wobei der Schmelzpunkt des Polyamids weniger als 200°C beträgt; und

mindestens eine Komponente (**f-PO**), welche umfaßt mindestens eines von:

(i) einem Ethylencopolymer, E/X/Y, wobei E Ethylen ist und mindestens 50 Gew.-% von E/X/Y ausmacht, X von 1-35 Gew.-% einer Säure, enthaltend ungesättigte Monocarbonsäure, sind und Y 0-49 Gew.-% einer Einheit, abgeleitet von mindestens einem Alkylacrylat, Alkylmethacrylat, Alkylvinylether, Kohlenmonoxid, Schwefeldioxid oder Gemischen davon, sind, wobei die Alkylgruppen 1-12 Kohlenstoffatome enthalten, und wobei weiterhin die Säuregruppen in der säurehaltigen Einheit von 0-100 Gew.-% eines Metallions neutralisiert sind;

(ii) ein polymeres Pfropfungsmittel, welches reaktive Gruppen enthält, ausgewählt aus mindestens einem von Epoxiden, Isocyanaten, Aziridinen, Silanen, Alkylhalogeniden, alpha-Halogenketonen und -aldehyden, oder Oxazolin, welches mit den säurehaltigen Einheiten in Komponente i) reagiert und zusätzlich mit den Pfropfstellen der Komponenten (**PA-I**) und (**PA-II**) reagiert, und die Gewichtsprozent des (der) die reaktiven Gruppen enthaltenden Monomers(e) 0,5 bis 15 Gewichtsprozent des polymeren Pfropfungsmittels betragen und der Rest des polymeren Pfropfungsmittels mindestens 50 Gew.-% Ethylen und von 0-49 Gew.-% einer Einheit, abgeleitet von mindestens einem Alkylacrylat, Alkylmethacrylat, Alkylvinylether, Kohlenmonoxid, Schwefeldioxid oder Gemischen davon, enthält, wobei die Alkylgruppen 1-12 Kohlenstoffatome enthalten; und

(iii) mindestens einem $C_2$-$C_{20}$-Polyolefin, ausgewählt aus Polyethylen, Polypropylen, Ethylen-Propylen-Dien-Terpolymer, Copolymeren von Ethylen mit Vinylacetat, Kohlenmonoxid oder ethylenisch ungesättigten Carbonsäuren oder Estern davon, auf welche von etwa 0,05 bis etwa 5 Gew.-% Monomere oder Gemische von Monomeren, ausgewählt aus ethylenisch ungesättigten sauren Monomeren oder ihren Derivaten, einschließlich Acrylsäure, Methacrylsäure, Maleinsäure, Fumarsäure, Itaconsäure, Crotonsäure, 5-Norbornen-2,3-dicarbonsäure, Maleinsäureanhydrid, Monomethylfumarat und Monomethylmaleat; und aus ethylenisch ungesättigten Monomeren, enthaltend amino- oder hydroxyfunktionelle Gruppen, einschließlich Vinylpyridinen, Vinylsilanen, 4-Vinylpyridin, Vinyltriethyloxysilan und Allylalkohol, aufgepfropft sind.

24. Airbag-Verbundschichtmaterial nach Anspruch 21, 22 oder 23, wobei das Material verwendet wird, um einen Airbag zur Verwendung in einem passiven Rückhaltesystem aufzubauen.

**Revendications**

1. Matériau composite en feuille pour airbag comprenant une pellicule polymère de polyamide collée à une toile, la pellicule polymère de polyamide étant choisie à partir de pellicules possédant un point de fusion inférieur à 220°C, le polyamide de la pellicule polymère contenant au moins certaines liaisons amides adjacentes le long de son squelette de polymère, au moins une ramification pendante alkyle $C_1$-$C_3$ et au moins une séquence d'au moins sept atomes de carbone consécutifs et la toile étant choisie parmi des polyamides et des polyesters.

2. Matériau composite en feuille pour airbag suivant la revendication 1, dans lequel le polyamide de la pellicule polymère possède un point de fusion dans l'intervalle de 100°C à 200°C.

3. Matériau composite en feuille pour airbag suivant la revendication 2, dans lequel la pellicule polymère de polyamide comprend une pellicule monocouche d'un mélange de polyamides, une pellicule multicouche de polyamides ou une pellicule co-extrudée de polyamides.

4. Matériau composite en feuille pour airbag suivant la revendication 1, dans lequel la pellicule polymère de polyamide est choisie parmi des pellicules de polyamide possédant un point de fusion inférieur à 200°C et un degré de cristallinité inférieur à celui du nylon 66.

5. Matériau composite en feuille pour airbag suivant la revendication 1, dans lequel le polyamide est préparé à partir

   (a) d'au moins un acide dicarboxylique et d'au moins une diamine dans lequel le au moins un acide dicarboxylique et/ou la au moins une diamine contiennent au moins une ramification pendante alkyle possédant de un à trois atomes de carbone, et dans lequel le au moins un acide dicarboxylique et/ou la au moins une diamine possèdent une séquence d'au moins sept groupes méthylènes;

   (b) d'au moins un acide alpha,oméga-aminocarboxylique, présentant la formule de $H_2N$-$R^1$-COOH, dans laquelle $R^1$ est une fraction aliphatique contenant au moins sept groupes méthylènes dans une séquence et une ramification pendante alkyle possédant de un à trois atomes de carbone;

   (c) d'au moins une diamine et d'au moins un nitrile choisi dans le groupe constitué d'alpha,oméga-aminoalkylènenitriles et d'alpha,oméga-alkylènedinitriles, dans lequel la diamine, le nitrile et/ou le dinitrile contiennent au moins une ramification pendante alkyle possédant de un à trois atomes de carbone; et dans lequel la diamine, le nitrile et/ou le dinitrile comprennent au moins sept groupes méthylènes; ou

   (d) de mélanges de n'importe lesquels des monomères décrits dans (a)-(c) ci-dessus.

6. Matériau composite en feuille pour airbag suivant la revendication 5, dans lequel les autres monomères utilisés pour préparer le polyamide de la présente invention sont choisis parmi des acides dicarboxyliques aromatiques, des diamines aromatiques, des acides dicarboxyliques alicycliques et des diamines alicycliques.

7. Matériau composite en feuille pour airbag suivant la revendication 5, dans lequel les acides dicarboxyliques aromatiques sont choisis parmi l'acide téréphtalique et l'acide isophtalique, l'acide dicarboxylique alicyclique est l'acide 1,4-bisméthylènecyclohexyldicarboxylique et la diamine alicyclique est le 1,4-bisméthylènediaminocyclohexane.

8. Matériau composite en feuille pour airbag suivant la revendication 5, dans lequel la pellicule polymère est basée sur des copolymères et des terpolymères d'hexaméthylènediamine, de 2-méthylpentaméthylènediamine, d'acide adipique, d'acide dodécanedioïque et d'epsilon-caprolactame (nylon 6).

9. Matériau composite en feuille pour airbag suivant la revendication 1, constitué d'un substrat de toile laminé sur une couche de pellicule polymère, dans lequel la couche de pellicule est formée à partir d'un système multiphase de polymères comprenant:

   au moins une résine polyamide aliphatique linéaire **(PA-I)**, présentant un intervalle étroit de température de point de fusion, un point de fusion dépassant 200 degrés C et un poids moléculaire d'au moins 5000;

au moins une résine polyamide (**PA-II**) comprenant au moins une ramification pendante alkyle possédant de 1 à 3 atomes de carbone dans au moins deux liaisons amides le long du squelette de polymère et au moins une séquence d'au moins sept atomes de carbone consécutifs, à l'exclusion des atomes de carbone dans des ramifications pendantes alkyles, s'il y en a, dans au moins deux liaisons amides le long du squelette de polymère, le point de fusion du polyamide étant inférieur à 200°C;

au moins un des composants (**f-PO**) qui comprend au moins un parmi:

(i) un copolymère d'éthylène, E/X/Y, où E est un éthylène et constitue au moins 50% en poids de E/X/Y, X est de 1-35% en poids d'un acide contenant un acide monocarboxylique insaturé et Y est de 0-49% en poids d'une fraction dérivée d'au moins un acrylate d'alkyle, un méthacrylate d'alkyle, un vinyléther d'alkyle, du monoxyde de carbone, du dioxyde de soufre ou des mélanges de ceux-ci où les groupes alkyles contiennent 1-12 atomes de carbone, et en outre dans lequel les groupes acides dans la fraction contenant un acide sont neutralisés à partir de 0-100% en poids d'un ion métallique;

(ii) un agent de greffe polymère qui contient des groupes réactifs choisis à partir d'au moins un parmi des époxydes, des isocyanates, des aziridines, des silanes, des halogénures d'alkyle, des alpha-halo cétones et aldéhydes ou une oxazoline, qui réagit avec les fractions contenant un acide dans un composant **i**) et réagit en outre avec les sites de greffe des composants (**PA-I**) et (**PA-II**) et le pourcentage en poids du ou des monomères contenant les groupes réactifs est de 0,5-15 pour-cent en poids de l'agent de greffe polymère et le reste de l'agent de greffe polymère contient au moins 50% en poids d'éthylène et 0-49% en poids d'une fraction dérivée d'au moins un acrylate d'alkyle, un méthacrylate d'alkyle, un vinyléther d'alkyle, du monoxyde de carbone, du dioxyde de soufre ou des mélanges de ceux-ci où les groupes alkyles contiennent 1-12 atomes de carbone; et

(iii) au moins une polyoléfine $C_2$-$C_{20}$ choisie parmi le polyéthylène, le polypropylène, un terpolymère d'éthylène-propylène-diène, des copolymères d'éthylène avec de l'acétate de vinyle, du monoxyde de carbone ou des acides carboxyliques éthyléniquement insaturés ou des esters de ceux-ci sur lesquels sont greffés d'environ 0,05 à environ 5% en poids de monomères ou de mélanges de monomères choisis parmi des monomères acides éthyléniquement insaturés ou leurs dérivés incluant l'acide acrylique, l'acide méthacrylique, l'acide maléique, l'acide fumarique, l'acide itaconique, l'acide crotonique, l'acide 5-norborène-2,3-dicarboxylique, l'anhydride maléfique, le fumarate de monométhyle et le maléate de monométhyle; et des monomères éthyléniquement insaturés contenant des groupes fonctionnels amino ou hydroxyle incluant des vinylpyridines, des vinylsilanes, la 4-vinylpyridine, le vinyltriéthyloxysilane et l'alcool d'allyle;

dans lequel la composition du système de polymères comprenant la couche de pellicule est **caractérisée par** la fonction:

$$f(c) = \{[PA\text{-}I] + [f\text{-}PO]\} / \{[PA\text{-}II] + [f\text{-}PO]\}$$

$$([PA\text{-}I] + [PA\text{-}II] + [f\text{-}PO] = 1)$$

dans laquelle **f(c) =** paramètre de la composition; **[PA-I]** = concentration du polyamide **(PA-I); [PA-II]** = concentration du polyamide **(PA-II); [f-PO]** = concentration de **(f-PO);** et **f(c)** possède des valeurs dans l'intervalle d'approximativement 0,5 à approximativement 2,0; et le numérateur détermine principalement les propriétés de barrière thermique de la pellicule et le dénominateur détermine principalement la température pour le laminage de la couche de pellicule sur le substrat de toile.

**10.** Matériau composite en feuille pour airbag suivant la revendication 9, dans lequel des quantités approximativement égales de **PA-I**, **PA-II** et **f-PO** sont combinées pour former la pellicule.

**11.** Matériau composite en feuille pour airbag suivant la revendication 9, dans lequel la toile est constituée de filaments ou d'un fil de polyamide ou de polyester et elle peut être tissée ou non tissée ou tricotée.

**12.** Matériau composite en feuille pour airbag suivant la revendication 9, dans lequel la pellicule est une pellicule monocouche ou multicouche qui est coulée ou soufflée ou orientée et elle est laminée ou extrudée.

**13.** Matériau composite en feuille pour airbag suivant la revendication 9, qui comprend des couches multiples de pellicule et de toile incluant des couches de pellicule laminées sur des couches de pellicules.

**14.** Procédé de laminage pour fabriquer un matériau composite en feuille pour airbag suivant la revendication 9, dans lequel la température de laminage est déterminée conformément à la fonction **f(c)** définie ici et dans lequel les propriétés de la pellicule ne se détériorent pas et un véritable stratifié est obtenu.

**15.** Procédé pour la fabrication d'un airbag destiné à une utilisation dans un dispositif de sécurité automatique qui comprend la construction d'un airbag à partir d'un matériau composite en feuille suivant la revendication 9 en coupant et en cousant le matériau composite en feuille conformément à une configuration d'airbag désirée.

**16.** Procédé pour la récupération des composants du matériau composite en feuille pour airbag suivant la revendication 9, dans lequel le matériau peut être délaminé mécaniquement en utilisant un moyen thermique, si nécessaire, et avec substantiellement pas de contamination croisée des composants.

**17.** Procédé pour la récupération des composants du matériau composite en feuille pour airbag suivant la revendication 9, qui consiste à désassembler le matériau de son module de gonflement, le cas échéant; à déconstruire la structure de l'airbag, s'il le faut; à soumettre le matériau à un procédé de délaminage mécanique, incluant éventuellement un moyen de délaminage thermique; et la récupération des composants de pellicule et de toile avec substantiellement pas de contamination croisée de ceux-ci en vue d'un recyclage.

**18.** Airbag constitué d'un matériau composite en feuille pour airbag suivant la revendication 9.

**19.** Dispositif de sécurité automatique comprenant un airbag suivant la revendication 18.

**20.** Procédé pour choisir la formulation d'un système de polymères pour une pellicule à utiliser dans un matériau composite en feuille dans lequel la composition du système de polymères est comme elle est suivant la revendication 9 et elle est choisie pour donner une fonctionnalité à la pellicule résultante conformément à la fonction **f(c)** et dans lequel **f(c)** possède des valeurs choisies pour produire un matériau composite en feuille qui est un stratifié véritable avec une résistance suffisante pour satisfaire les exigences d'un composite en feuille.

**21.** Matériau composite en feuille pour airbag suivant la revendication 9, constitué d'un substrat de toile laminé sur une couche de pellicule polymère, dans lequel la couche de pellicule est formée à partir d'un système multiphase de polymères comprenant:

d'au moins environ 10% en poids à environ 90% en poids d'au moins une résine polyamide aliphatique linéaire (**PA-I**), présentant un intervalle étroit de température de point de fusion, un point de fusion dépassant 200 degrés C et un poids moléculaire d'au moins 5000; et
d'au moins environ 10% en poids à environ 90% en poids d'au moins une résine polyamide (**PA-II**) comprenant au moins une ramification pendante alkyle possédant de I à 3 atomes de carbone dans au moins deux liaisons amides le long du squelette de polymère et au moins une séquence d'au moins sept atomes de carbone consécutifs, à l'exclusion des atomes de carbone dans des ramifications pendantes alkyles, s'il y en a, dans au moins deux liaisons amides le long du squelette de polymère, le point de fusion du polyamide étant inférieur à 200°C.

**22.** Matériau composite en feuille pour airbag suivant la revendication 9, constitué d'un substrat de toile laminé sur une couche de pellicule polymère, dans lequel la couche de pellicule est formée à partir d'un système multiphase de polymères comprenant:

d'au moins environ 10% en poids à environ 90% en poids d'au moins une résine polyamide aliphatique linéaire (**PA-I**), présentant un intervalle étroit de température de point de fusion, un point de fusion dépassant 200 degrés C et un poids moléculaire d'au moins 5000; et
d'au moins environ 10% en poids à environ 90% en poids d'au moins un des composants (**f-PO**) qui comprend:

au moins un parmi

(i) un copolymère d'éthylène, E/X/Y, où E est un éthylène et constitue au moins environ 50% en poids de E/X/Y, X est d'environ 1 à environ 35% en poids d'un acide contenant un acide monocarboxylique insaturé et Y est de 0 à environ 49% en poids d'une fraction dérivée d'au moins un acrylate d'alkyle, un méthacrylate d'alkyle, un vinyléther d'alkyle, du monoxyde de carbone, du dioxyde de soufre ou des mélanges de ceux-ci où les groupes alkyles contiennent 1-12 atomes de carbone, et en outre dans lequel les groupes acides dans la fraction contenant un acide sont neutralisés à partir de 0 à environ 100% en poids d'un ion métallique;

(ii) un agent de greffe polymère qui contient des groupes réactifs choisis à partir d'au moins un parmi des époxydes, des isocyanates, des aziridines, des silanes, des halogénures d'alkyle, des alpha-halo cétones et aldéhydes ou une oxazoline, qui réagit avec les fractions contenant un acide dans un composant i) et réagit en outre avec les sites de greffe des composants (**PA-I**) et (**PA-II**) et le pourcentage en poids du ou des monomères contenant les groupes réactifs est d'environ 0,5 à environ 15 pour-cent en poids de l'agent de greffe polymère et le reste de l'agent de greffe polymère contient au moins environ 50% en poids d'éthylène et de 0 à environ 49% en poids d'une fraction dérivée d'au moins un acrylate d'alkyle, un méthacrylate d'alkyle, un vinyléther d'alkyle, du monoxyde de carbone, du dioxyde de soufre ou des mélanges de ceux-ci où les groupes alkyles contiennent 1-12 atomes de carbone; et

(iii) au moins une polyoléfine $C_2$-$C_{20}$ choisie parmi le polyéthylène, le polypropylène, un terpolymère d'éthylène-propylène-diène, des copolymères d'éthylène avec de l'acétate de vinyle, du monoxyde de carbone ou des acides carboxyliques éthyléniquement insaturés ou des esters de ceux-ci sur lesquels sont greffés d'environ 0,05 à environ 5% en poids de monomères ou de mélanges de monomères choisis parmi des monomères acides éthyléniquement insaturés ou leurs dérivés incluant l'acide acrylique, l'acide méthacrylique, l'acide maléique, l'acide fumarique, l'acide itaconique, l'acide crotonique, l'acide 5-norborène-2,3-dicarboxylique, l'anhydride maléique, le fumarate de monométhyle et le maléate de monométhyle; et des monomères éthyléniquement insaturés contenant des groupes fonctionnels amino ou hydroxyle incluant des vinylpyridines, des vinylsilanes, la 4-vinylpyridine, le vinyltriéthyloxysilane et l'alcool d'allyle.

**23.** Matériau composite en feuille pour airbag suivant la revendication 9, constitué d'un substrat de toile laminé sur une couche de pellicule polymère, dans lequel la couche de pellicule est formée à partir d'un système multiphase de polymères comprenant:

au moins une résine polyamide (**PA-II**), comprenant au moins une ramification pendante alkyle possédant de 1 à 3 atomes de carbone dans au moins deux liaisons amides le long du squelette de polymère et au moins une séquence d'au moins sept atomes de carbone consécutifs, à l'exclusion d'atomes de carbone dans des ramifications pendantes alkyles, s'il y en a, dans au moins deux liaisons amides le long du squelette de polymère, le point de fusion du polyamide étant inférieur à 200°C; et
au moins un des composants (**f-PO**) qui comprend au moins un parmi:

(i) un copolymère d'éthylène, E/X/Y, où E est un éthylène et constitue au moins 50% en poids de E/X/Y, X est de 1-35% en poids d'un acide contenant un acide monocarboxylique insaturé et Y est de 0-49% en poids d'une fraction dérivée d'au moins un acrylate d'alkyle, un méthacrylate d'alkyle, un vinyléther d'alkyle, du monoxyde de carbone, du dioxyde de soufre ou des mélanges de ceux-ci où les groupes alkyles contiennent 1-12 atomes de carbone, et en outre dans lequel les groupes acides dans la fraction contenant un acide sont neutralisés à partir de 0-100% en poids d'un ion métallique;

(ii) un agent de greffe polymère qui contient des groupes réactifs choisis à partir d'au moins un parmi des époxydes, des isocyanates, des aziridines, des silanes, des halogénures d'alkyle, des alpha-halo cétones et aldéhydes ou une oxazoline, qui réagit avec les fractions contenant un acide dans un composant i) et réagit en outre avec les sites de greffe des composants (**PA-I**) et (**PA-II**) et le pourcentage en poids du ou des monomères contenant les groupes réactifs est de 0,5-15 pour-cent en poids de l'agent de greffe polymère et le reste de l'agent de greffe polymère contient au moins 50% en poids d'éthylène et 0-49% en poids d'une fraction dérivée d'au moins un acrylate d'alkyle, un méthacrylate d'alkyle, un vinyléther d'alkyle, du monoxyde de carbone, du dioxyde de soufre ou des mélanges de ceux-ci où les groupes alkyles contiennent 1-12 atomes de carbone; et

(iii) au moins une polyoléfine $C_2$-$C_{20}$ choisie parmi le polyéthylène, le polypropylène, un terpolymère d'éthylène-propylène-diène, des copolymères d'éthylène avec de l'acétate de vinyle, du monoxyde de carbone ou des acides carboxyliques éthyléniquement insaturés ou des esters de ceux-ci sur lesquels sont greffés d'environ 0,05 à environ 5% en poids de monomères ou de mélanges de monomères choisis parmi des monomères acides éthyléniquement insaturés ou leurs dérivés incluant l'acide acrylique, l'acide méthacrylique, l'acide maléfique, l'acide fumarique, l'acide itaconique, l'acide crotonique, l'acide 5-norborène-2,3-dicarboxylique, l'anhydride maléfique, le fumarate de monométhyle et le maléate de monométhyle; et des monomères éthyléniquement insaturés contenant des groupes fonctionnels amino ou hydroxyle incluant des vinylpyridines, des vinylsilanes, la 4-vinylpyridine, le vinyltriéthyloxysilane et l'alcool d'allyle.

24. Matériau composite en feuille pour airbag suivant la revendication 21, 22 ou 23, dans lequel le matériau est utilisé pour construire un airbag dans un dispositif de sécurité automatique.

# Figure 1

[f-PO]=100

[PA-1]=30

[PA-I]:[f-PO]::50:50

[PA-II]:[f-PO]::50:50

[PA-I]:[PA-II]:[f-PO]::30:35:35

[PA-I]

[PA-II]=100

# Figure 2

# Figure 3